(19) Europäisches Patentamt
European Patent Office
Office européen des brevets

(11) **EP 1 867 875 A2**

(12) **EUROPEAN PATENT APPLICATION**

(43) Date of publication:
**19.12.2007 Bulletin 2007/51**

(51) Int Cl.:
**F04B 49/06** (2006.01)          **F04B 27/18** (2006.01)

(21) Application number: **07018509.5**

(22) Date of filing: **23.05.2006**

(84) Designated Contracting States:
**DE FR GB**

(30) Priority: **25.05.2005 JP 2005153188**

(62) Document number(s) of the earlier application(s) in
accordance with Art. 76 EPC:
**06010702.6 / 1 726 829**

(71) Applicant: **Calsonic Kansei Corporation
Tokyo 164-8602 (JP)**

(72) Inventors:
• **Takahashi, Eiji
Tokyo 164-8602 (JP)**
• **Kawachi, Masaki
Tokyo 164-8602 (JP)**

• **Ogawa, Masanori
Tokyo 164-8602 (JP)**
• **Sekizuka, Morio
Tokyo 164-8602 (JP)**

(74) Representative: **Grünecker, Kinkeldey,
Stockmair & Schwanhäusser
Anwaltssozietät
Maximilianstrasse 58
80538 München (DE)**

Remarks:
This application was filed on 20 - 09 - 2007 as a
divisional application to the application mentioned
under INID code 62.

(54) **Control apparatus for variable capacity compressor and method of calculating torque of variable capacity compressor**

(57)    An apparatus for calculating torque of a variable capacity compressor is provided. The compressor includes a suction chamber, a cylinder bore, a discharge chamber, a piston to draw coolant from the suction chamber into the cylinder bore, compress the drawn coolant, and discharge the compressed coolant into the discharge chamber, and a torque calculator. The compressor includes a clutch configured to be turned on to transmit driving force from a driving source to the piston so that the piston operates and to be turned off to disconnect the driving force of the driving source from the piston so that the piston stops. The apparatus comprises a pressure adjuster adjusting a back pressure introduced from the discharge chamber to the back of the piston and thereby adjust a stroke of the piston, and a capacity controller including a start-torque-calculate adminicle configured to provide the pressure adjuster with an external control signal for at least a predetermined time after the clutch is turned off, the external control signal being identical to a maximum capacity signal to establish a full piston stroke. The torque calculator has a start torque calculator configured to calculate a start torque of the compressor when the clutch is turned on.

FIG. 1

**Description**

CROSS REFERENCE TO RELATED APPLICATIONS AND INCORPORATION BY REFERENCE

This application is based on and claims the benefit of priority from the prior Japanese Patent Application No. 2005-153188 filed on May 25, 2005; the entire contents thereof are incorporated herein by reference.

BACKGROUND OF THE INVENTION

1. Field of the Invention

The present invention relates to a method of and an apparatus for calculating and controlling torque of a variable capacity compressor arranged in a refrigeration cycle.

2. Description of Related Art

A variable capacity compressor is utilized in a refrigeration cycle of, for example, an air conditioner of a vehicle. In the vehicle, the compressor is connected to a vehicle engine by an endless belt. The belt connects a main pulley fixed to a drive shaft of the engine to a follower pulley fixed to a drive shaft of the compressor. The engine serves as a driving source for driving the compressor. If the compressor varies its coolant discharge capacity, the load on the engine varies, which may cause an engine stall during an idling operating. To prevent this, an engine controller must control an intake air quantity (fuel mixture supply quantity) in response to the load (torque) of the compressor. To achieve this, the engine controller must know the torque of the compressor. For this, there have been proposed various compressor torque calculating apparatuses, such as those disclosed in Japanese Unexamined Patent Application Publications No. Hei-5-99156, No. 2004-211663, and No. 2003-278660.

Among these torque calculation apparatuses, Japanese Unexamined Patent Application Publications No. Hei-5-99156 calculates a coolant flow rate according to information (a high pressure in a refrigeration cycle, a coolant temperature in a condenser, an ambient temperature, and the like), and according to the calculated coolant flow rate, estimates torque of the compressor. The torque estimated by this related art is a steady-state torque, i.e., an operating torque of the compressor during a period in which a refrigeration cycle is steadily passing coolant.

EP 1437245 A2 according to the preamble of claim 1 discloses a variable displacement compressor comprising a shaft connected to an engine. The compressor includes a suction chamber, a discharge chamber, a piston to draw coolant from the suction chamber, compress the drawn coolant and discharge the compressed coolant into the discharge chamber. The compressor includes a compressor torque estimate device including a torque calculator and a corrector.

SUMMARY OF THE INVENTION

In a short period at the start of operation of the variable capacity compressor, for example, in a period of about four seconds after the start of the compressor, the flow of coolant is unstable, and therefore, it is impossible for the related art to estimate torque based on a coolant flow rate. When the compressor is stopped, coolant in the compressor changes its pressure to an equilibrium state. During the pressure changing period, a piston in the compressor is moving, and therefore, it is difficult to estimate the position of the piston, and therefore, it is impossible to estimate a start torque of the compressor when the compressor is restarted soon after being stopped. Due to this, some related art compressor controllers prohibit activation of the compressor for ten seconds after the compressor is stopped. This is inconvenient in terms of free control of the compressor. The compressor must be turned on and off whenever required.

the present invention provides a method of and an apparatus for calculating torque of a variable capacity compressor, even when the compressor is restarted just after being stopped.

A first aspect of the present invention provides a method of calculating torque of a variable capacity compressor. The compressor includes a suction chamber, a cylinder bore, a discharge chamber, a piston to draw coolant from the suction chamber into the cylinder bore, compress the drawn coolant, and discharge the compressed coolant into the discharge chamber, a clutch configured to transmit driving force from a driving source to drive the piston and configured to disconnect the driving force of the driving source so that the piston is not driven, and a pressure adjuster to adjust a back pressure introduced from the discharge chamber to the back of the piston and thereby adjust a piston stroke. The method includes counting an OFF time when the clutch is tuned off from an ON state until the clutch is next turned on, determining whether or not the OFF time is less than a predetermined time, and calculating a start torque of the compressor depending on the determination.

According to a second aspect of the present invention provides a method of calculating torque of a variable capacity compressor. The compressor includes a suction chamber, a cylinder bore, a discharge chamber, a piston to draw coolant from the suction chamber into the cylinder bore, compress the drawn coolant, and discharge the compressed coolant into the discharge chamber, a clutch configured to transmit driving force from a driving source to drive the piston and configured to disconnect the driving force of the driving source so that the piston is not' driven, and a pressure adjuster to adjust a back pressure introduced from the discharge chamber to the back of the piston and thereby adjust a piston stroke. The method includes: providing the pressure adjuster with an external control signal for at least a predetermined time after the clutch is turned off, the external control signal being identical to a maximum capacity signal to establish a full piston stroke; and calculating a start torque of the compressor when the clutch is turned on.

A third aspect of the present invention provides a method of calculating torque of a variable capacity compressor. The compressor includes a suction chamber, a cylinder bore, a discharge chamber, a piston to draw coolant from the suction chamber into the cylinder bore, compress the drawn coolant, and discharge the compressed coolant into the discharge chamber, a clutch configured to transmit driving force from a driving source to drive the piston and configured to turn off so as to disconnect the driving force of the driving source so as to stop the piston, and a pressure adjuster to adjust a back pressure introduced from the discharge chamber to the back of the piston and thereby adjust a piston stroke. The method includes providing the pressure adjuster with an external control signal after the clutch is turned off from an ON state, the external control signal being identical to a maximum capacity signal to establish a full piston stroke, counting an OFF time when the clutch is tuned off from an ON state until the clutch is next turned on, determining whether or not the OFF time is less than a predetermined time, and calculating a start torque of the compressor depending on the determination.

BRIEF DESCRIPTION OF THE DRAWINGS

Figure 1 is a view generally showing a vehicle air conditioner according to an embodiment of the present invention;
Fig. 2 is a sectional view showing a variable capacity compressor of the air conditioner of Fig. 1;
Fig. 3 is a view explaining a capacity changing mechanism of the compressor of Fig. 2;
Fig. 4 is a block diagram showing a compressor controller of the air conditioner of Fig. 1;
Fig. 5 is a view showing a refrigeration cycle in the air conditioner of Fig. 1 and a Mollier chart of the refrigeration cycle;
Fig. 6 is a view showing characteristic curves of compressor suction pressure and compressor discharge pressure with different duty factors in the air conditioner of Fig. 1;
Fig. 7 is a view showing characteristic curves of compressor discharge pressure and torque with a constant load on the refrigeration cycle (evaporator) and different duty factors;
Fig. 8 shows compressor discharge pressure and torque with different loads on the refrigeration cycle (evaporator);
Fig. 9 is a view showing a characteristic curve of torque and compressor discharge pressure with a constant duty factor of 60%;
Fig. 10 is a flowchart showing a process of calculating steady-state torque of the air conditioner of Fig. 1;
Fig. 11 is a view showing characteristic curves of estimated torque and actual torque of the air conditioner of Fig. 1;
Fig. 12 is a flowchart showing a process of stopping the compressor of the air conditioner of Fig. 1;
Fig. 13 is a flowchart showing a process of restarting the compressor of the air conditioner of Fig. 1;
Fig. 14 is a flowchart showing a process of calculating a start torque of the compressor of the air conditioner of Fig. 1;
Fig. 15 is a timing chart showing an ON/OFF state of an air-conditioner clutch and an output duty factor when stopping the compressor of the air conditioner of Fig. 1;
Fig. 16 is a timing chart showing an ON/OFF state of the air-conditioner clutch, an output duty factor, and a torque calculating pattern when restarting the compressor of the air conditioner of Fig. 1;
Fig. 17 is a view showing experimental characteristic curves of start torque of the compressor of the air conditioner of Fig. 1; and
Fig. 18 is a view showing a characteristic curve of ambient temperature and additional torque related to the compressor of the air conditioner of Fig. 1.

DETAILED DESCRIPTION OF EMBODIMENTS

Embodiments of the present invention will be explained with reference to the drawings.

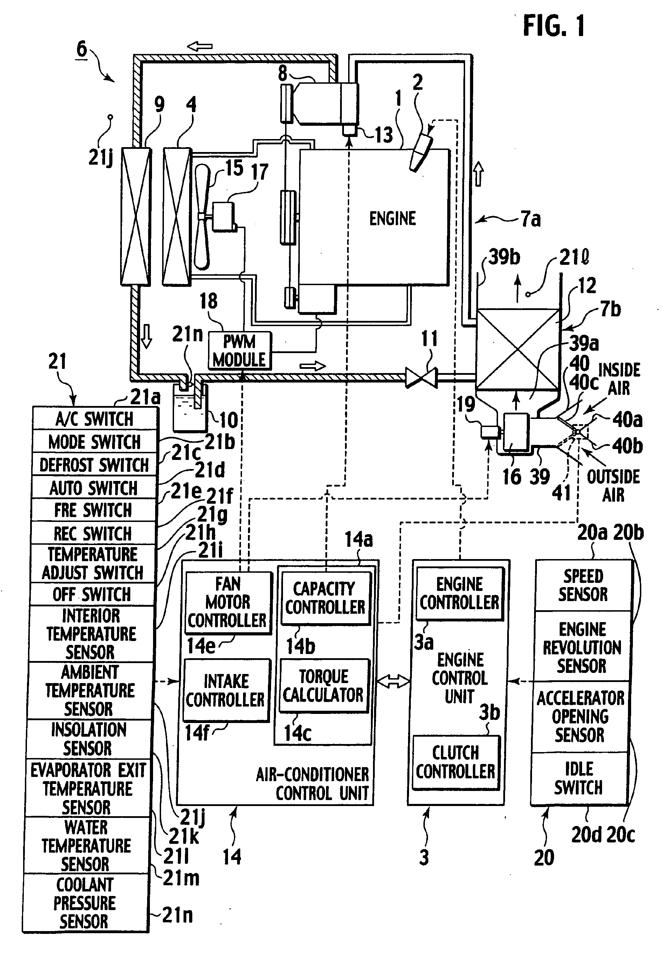

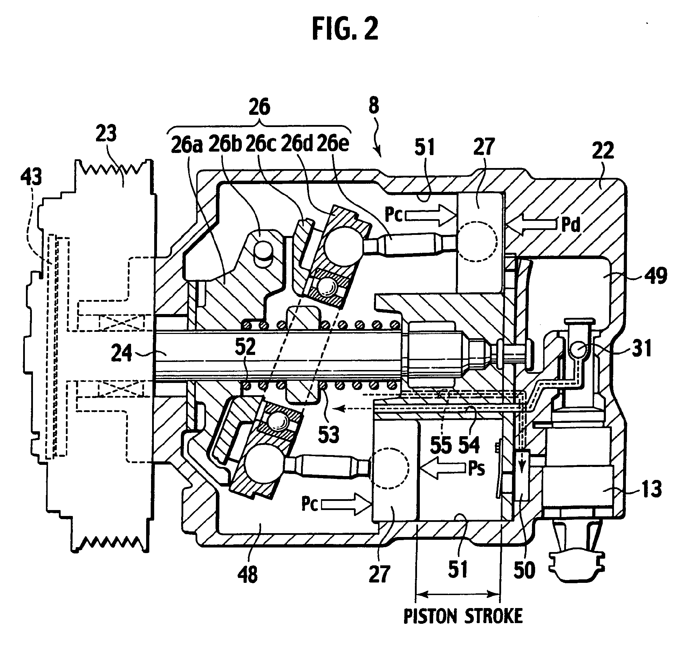

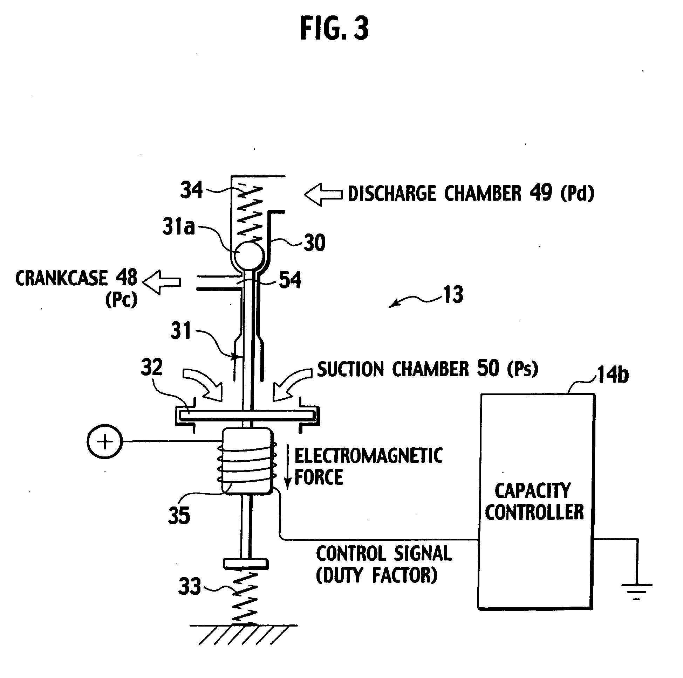

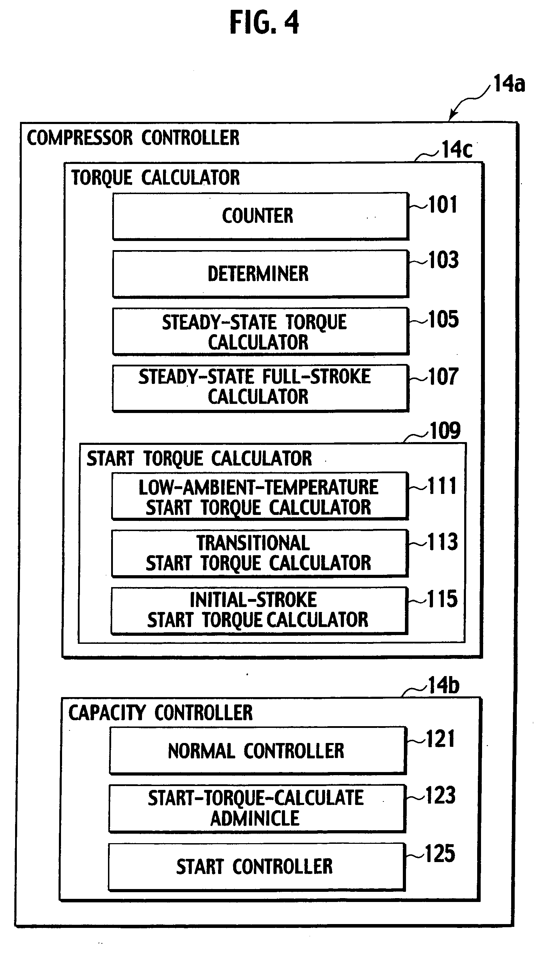

Figures 1 to 17 show a method of and an apparatus for calculating torque of a variable capacity compressor according to embodiments of the present invention. Figure 1 generally shows an air conditioner 6 for a vehicle, including the variable capacity compressor 8, Fig. 2 is a sectional view showing the compressor 8, Fig. 3 schematically shows a control valve 13 of the compressor 8, and Fig. 4 is a block diagram showing a compressor controller 14a for controlling the compressor 8.
In Fig. 1, an engine 1 of the vehicle has a fuel injector 2 for injecting fuel. An opening of the fuel injector 2 is adjustable to change air supply (fuel mixture supply) to a cylinder bore of the engine and control revolutions of the engine 1. The engine 1 is connected through cooling water piping (not represented with a specific reference numeral) to a radiator 4 that radiates heat of the engine 1.

[0015]   - The engine 1 is mainly controlled by an engine control unit 3. The engine control unit 3 receives data from an engine control sensor group 20. The engine control sensor group 20 includes a speed sensor 20a, an engine revolution sensor 20b, an accelerator opening sensor 20c, an idle switch 20d, and the like. According to data from these sensors and engine control instructions, the engine control unit 3 including an engine controller 3a controls the engine 1 and fuel injector 2. The engine control unit 3 also includes a clutch controller 3b that controls the ON/OFF operation of an air conditioner (A/C) clutch 43 of the compressor 8.

The air conditioner 6 of the vehicle has a refrigeration cycle unit 7a and an air conditioning unit 7b. The air conditioning unit 7b includes an evaporator 12 and provides a temperature-adjusted air flow. The refrigeration cycle unit 7a includes the variable capacity compressor 8, a condenser 9, a liquid tank 10, a temperature-sensitive automatic expansion valve 11, the evaporator 12, and coolant piping (not represented with a specific reference numeral) that connects the components 8 to 11 to one another.

The compressor 8 includes the A/C clutch 43 (Fig. 2) to connect and disconnect the compressor 8 to and from the engine 1, which serves as a driving source. When the A/C clutch 43 is turned off, no driving force is transmitted from the engine 1 to the compressor 8, and therefore, the compressor 8 stops. When the A/C clutch 43 is turned on, driving force is transmitted from the engine 1 to the compressor 8 to drive the compressor 8. When driven, the compressor 8 compresses a low-temperature, low-pressure gaseous coolant and provides the condenser 9 with a high-temperature, high-pressure compressed gaseous coolant.

The condenser 9 is arranged in front of the radiator 4, so as to be exposed to an air flow when the vehicle is running and a air flow from an electric fan 15. The high-temperature, high-pressure gaseous coolant from the compressor 8 is cooled by the air flow passing through the condenser 9 to a condensation point and becomes a high-pressure, middle-temperature liquid coolant that flows into the liquid tank 10.

The liquid tank 10 removes water and foreign matter from the high-pressure, middle-temperature liquid coolant and separates liquid from gas. The separated liquid coolant is passed from the liquid tank 10 to the expansion valve 11.

The expansion valve 11 abruptly expands the high-pressure, middle-temperature liquid coolant into a low-pressure, low-temperature atomized liquid coolant. The atomized liquid coolant flows to the evaporator 12.

The evaporator 12 is arranged in a duct of the air conditioning unit 7b, which is located in a vehicle interior. The evaporator 12 cools air passing through the duct. The atomized liquid coolant passing through the evaporator 12 evaporates to remove heat from air passing through the evaporator 12, thereby cooling the air. The low-temperature, low-pressure gaseous coolant from the evaporator 12 flows to the compressor 8.

The air conditioning unit 7b is arranged in the vehicle interior and blows a temperature-adjusted air flow into the vehicle interior. The air conditioning unit 7b includes a casing 39 defining the duct 39a, an intake 40 arranged at an upstream end of the duct 39a, to take air into the duct 39a, a blower fan 16 arranged downstream from the intake 40, the evaporator 12 arranged downstream from the blower fan 16, and outlet door (not shown) for adjusting the openings of the outlet 39b of the duct 39a that is provided at a downstream end of the duct 39a and communicated with the vehicle interior.

The intake 40 includes an inside air intake 40a to take air from the vehicle interior, an outside air intake 40b to take air from the outside of the vehicle, and an intake door 40c to adjust the openings of the inside and outside air intakes 40a and 40b.

The blower fan 16 is driven by a blower fan motor 19. When the blower fan 16 is driven, the intake 40 takes inside and/or outside air into the duct 39a, and the air is blown toward the evaporator 12 that cools the air and sends the cooled air through the outlet 39b into the vehicle interior.

The variable capacity compressor 8 will be explained in detail.

First, a structure of the compressor 8 will be explained with reference to Figs. 2 and 3.

In Fig. 2, the compressor 8 has a housing 22. The housing 22 defines cylinder bores 51 circumferentially formed around an axial line at regular intervals, a suction chamber 50 and a discharge chamber 49 formed on a top-dead-center side of the cylinder bores 51, and a crankcase 48 formed on a bottom-dead-center side of the cylinder bores 51. In each cylinder bore 51, a piston 27 reciprocates. The housing 22 supports a rotary shaft 24 that is freely rotatably in the crankcase 48. The clutch 43 of the compressor 8 connects and disconnects driving torque from the engine 1, serving as a driving source, to and from the rotary shaft 24. The rotary shaft 24 has a conversion mechanism 26 (26a, 26b, 26c, 26d, 26e) for converting rotation of the rotary shaft 24 into reciprocation of the pistons 27.

The conversion mechanism 26 includes, for example, a rotor 26a, a sleeve 26b, a hub 26c, a swash plate 26d, piston rods 26e, and the like. The rotor 26a is fixed to and rotatable with the rotary shaft 24. The sleeve 26b is slidable along the rotary shaft 24. The hub 26c is attached to the sleeve 26b, is freely inclinable relative to the rotary shaft 24, and is linked to the rotor 26a so that the hub 26c may rotate together with the rotary shaft 24. The swash plate 26d is attached to the hub 26c so that the swash plate 26d may incline relative to the rotary shaft 24. The piston rods 26e connect the swash plate 26d to the pistons 27.

When the clutch 43 is connected (turned on) to rotate the rotary shaft 24, each piston 27 reciprocates in the corresponding cylinder bore 51. The piston 27 draws coolant from the suction chamber 50 into the cylinder bore 51, compresses the drawn coolant in the cylinder bore 51, and discharges the compressed coolant from the cylinder bore 51 into the discharge chamber 49.

Coolant is supplied from an upstream side to the compressor 8 and is guided through a suction port (not shown) into the suction chamber 50. Coolant in the discharge chamber 49 is discharged through a discharge port (not shown) to a downstream side of the compressor 8.

The piston 27 changes its stroke depending on an inclination angle of the swash plate 26d.

When the compressor 8 stops, a pressure Pc of the crankcase 48 becomes equal to a pressure (a low pressure Ps in the refrigeration cycle 7a) of the suction chamber 50. Then, the swash plate 26d and each piston 27 return to initial positions due to a force provided by first and second springs 52 and 53. According to the embodiment, the initial positions of the swash plate 26d and piston 27 are intermediate between a full-stroke position and a destroke (zero-stroke) position of the swash plate 26d and piston 27.

To enable the control of the discharge capacity of the compressor 8, the compressor 8 has a pressure introducing path 54 to connect the discharge chamber 49 to the crankcase 48, a pressure releasing path 55 to connect the crankcase 48 to the suction chamber 50, and a control valve 13 having a valve plug 31a to change the area of one (the pressure introducing path 54 according to the embodiment) of the pressure introducing path 54 and pressure releasing path 55.

Changing the opening of the valve plug 31a of the control valve 13 changes the flow rate of high-pressure coolant flowing from the discharge chamber 49 to the crankcase 48 through the pressure introducing path 54, thereby changing the pressure of the crankcase 48. This results in changing a pressure difference between a pressure on the top-dead-center side of the piston 27 (i.e., the pressure Ps of the suction chamber 50) and a pressure on the bottom-dead-center side of the piston 27 (i.e., the pressure Pc of the crankcase 48), thereby changing a piston stroke, i.e., the discharge capacity of the compressor 8.

Figure 3 shows the details of the control valve 13. The control valve 13 has a valve case 30 partly defining the pressure introducing path 54 and a plunger 31 that reciprocates in the valve case 30. The plunger 31 is integral with the valve plug (ball valve) 31a, a diaphragm 32, and a solenoid core of a electromagnetic coil 35 as an actuator. Lift of the plunger determines a sectional area of the pressure introducing path 54. The diaphragm 32 serves as a pressure sensitive part on which the suction pressure Ps of the suction chamber 50, i.e., the low pressure Ps of the refrigeration cycle 7a acts. Electromagnetic force produced by the electromagnetic coil 35, when the coil 35 is energized, is applied to the plunger 31 to move the plunger 31. Each axial end of the plunger 31 receives a spring force from set springs 33 and 34.

The set springs 33 and 34 and diaphragm 32 determine a set pressure of the valve plug 31a.

The diaphragm 32 responds to the low pressure Ps. When the low pressure Ps decreases, the diaphragm 32 moves the valve plug 31a in a valve opening direction. When the low pressure Ps increases, the diaphragm 32 moves the valve plug 31a in a valve closing direction.

When the electromagnetic coil 35 is energized to produce electromagnetic force, the valve plug 31a moves in the valve closing direction. Namely, the electromagnetic force of the coil 35 can change the set pressure of the valve plug 31a.

The electromagnetic coil 35 receives a control pulse signal or an external control signal from a capacity controller 14b of an air-conditioner control unit 14 (to be explained later). The control pulse signal has a duty factor, and an electromagnetic force proportional to the duty factor is applied to the plunger 31. The applied electromagnetic force changes the set pressure of the valve plug 31a, thereby chanting a lift (valve opening) of the valve plug 31a. A change in the lift (valve opening) of the valve plug 31a changes a flow rate of high-pressure coolant flowing from the discharge chamber 49 to the crankcase 48 through the pressure introducing path 54. This operation results in changing the inclination of the swash plate 26d to change the piston stroke.

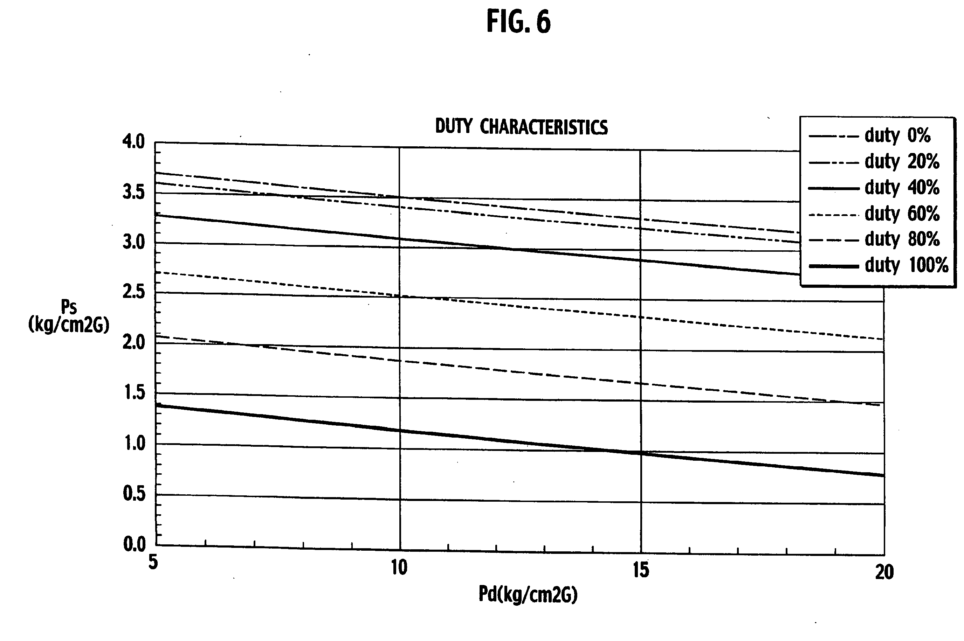

When the electromagnetic coil 35 is deactivated (duty factor of 0%), the discharge pressure (the high pressure of the refrigeration cycle 7a) Pd and suction pressure (the low pressure of the refrigeration cycle 7a) Ps follow a duty-factor-0% curve (dot-and-dash curve) shown in Fig. 6.

In the duty-factor-0% state, an assumption is made that load on the evaporator 12 changes to extremely increase the suction pressure Ps (for example, 5 Kg/cm$^2$G). The pressure of 5 Kg/cm$^2$G acts on the diaphragm 32 to push down the valve plug 31a to a totally closed position. At the totally closed position, no high-pressure coolant is introduced from the discharge chamber 49 to the crankcase 48 through the pressure introducing path 54, and coolant in the crankcase 48 is released through the pressure releasing path 55 to the suction chamber 50. As a result, the pressure of the crankcase 48 gradually decreases to the suction pressure Ps, thereby establishing a full-stroke (maximum capacity) state. Namely, the quantity of coolant circulating through the refrigeration cycle 7a increases to gradually decrease the suction pressure Ps. When the suction pressure Ps approaches the duty-factor-0% curve, the suction pressure Ps acting on the diaphragm 32 decreases to lift the valve plug 31a and increase the opening of the valve plug 31a. This operation results in increasing the flow rate of high-pressure coolant from the discharge chamber 49 into the crankcase 48 through the pressure introducing path 54, thereby increasing the pressure Pc of the crankcase 48. Namely, pressure acting on the back of the piston 27 gradually increases to gradually reduce the piston stroke, and a relationship between the pressures Ps and Pd stabilizes in a capacity controlled state along the duty-factor-0% curve.

If the duty factor is changed, the relationship between the pressures Pd and Ps stabilizes along a curve (Fig. 6) corresponding to the changed duty factor.

For example, if the duty factor is changed to 60%, the pressure relationship of the compressor 8 and refrigeration cycle 7a, i.e., the relationship between the discharge pressure Pd and the suction pressure Ps will follow a duty-factor-60% curve of Fig. 6.

In the duty-factor-60% state, an assumption is made that load on the evaporator 12 changes to extremely increase the suction pressure (low pressure) Ps (for example, 5 Kg/cm$^2$G). The pressure of 5 Kg/cm$^2$G acts on the diaphragm 32 to push down the valve plug 31a. The pressure of the crankcase 48 gradually decreases to the suction pressure Ps of the suction chamber 50, thereby establishing a full-stroke (maximum capacity) state. The quantity of coolant circulating through the refrigeration cycle 7a increases to gradually decrease the suction pressure Ps. When the suction pressure Ps approaches the duty-factor-60% curve, the suction pressure Ps acting on the diaphragm 32 decreases to lift the valve plug 31a. This operation results in increasing the pressure acting on the back of the piston 27, thereby gradually reducing the piston stroke. The low pressure Ps and high pressure Pd stabilize to establish a capacity controlled state along the duty-factor-60% curve.

In this way, the suction pressure Ps of the compressor 8 can be approximated according to the duty factor and the discharge pressure Pd of the compressor 8.

The air conditioner 6 is mainly controlled by the air-conditioner control unit 14 and partly by the engine control unit 3.

In Fig. 1, the air-conditioner control unit 14 is connected to the engine control unit 3 with a bidirectional communication line. The air-conditioner control unit 14 receives data from an air-conditioner control sensor group 21. The sensor group 21 includes standard sensors provided for the air conditioner 6, such as an air-conditioner (A/C) switch 21a, a mode switch 21b, a defrost switch 21c, an auto switch 21d, a fresh air (FRE) switch 21e, a recirculation (REC) switch 21f, a temperature adjust switch 21g, an OFF switch 21h, an interior temperature sensor 21i to detect a temperature in the vehicle interior, an ambient temperature sensor 21j to detect a temperature outside the vehicle, an insolation sensor 21k, an evaporator exit temperature sensor 21l to detect an air temperature at the exit of the evaporator 12, a water temperature sensor 21m, a coolant pressure sensor 21n to detect a coolant pressure on the discharge side of the compressor 8, and the like.

The air-conditioner control unit 14 controls the compressor 8, blower fan motors 17 and 19, intake door 40, and the like according to data from the above-mentioned sensors and air-conditioner control instructions.

The air-conditioner control unit 14 includes the compressor controller 14a, a fan motor controller 14e, and an intake controller 14f as shown in Fig. 1.

The fan motor controller 14e receives a target interior temperature set by a passenger through the temperature adjust switch 21g and data from the sensors of the air-conditioner control sensor group 21, calculates a flow rate of air to be supplied from the air conditioning unit 7b, and according to the calculated flow rate, controls the fan motor 17 of the electric fan 15 through a PWM (pulse width modulation) module 18, thereby controlling a flow rate of the electric fan 15. At the same time, the fan motor controller 14e controls the fan motor 19 of the electric fan 16, to control a flow rate of the electric fan 16. The fan motors 15 and 19 may be directly or indirectly controlled with the engine control unit 3.

If the fresh air (FRE) switch 21e is pushed or if a control signal to establish an outside air mode (fresh air mode) is provided, the intake controller 14f drives a door driver 41 of the intake door 40c to close the inside air intake 40a and open the outside air intake 40b so that fresh air is guided into the duct of the air conditioning unit 7b. If the recirculation (REC) switch 21f is pushed or if a control signal to establish an inside air mode (recirculation mode) is provided, the intake controller 14f drives the door driver 41 of the intake door 40c to open the inside air intake 40a and close the outside air intake 40b so that inside air is introduced into the duct of the air conditioning unit 7b.

The compressor controller 14a includes the capacity controller 14b and torque calculator 14c.

The capacity controller 14b controls the control valve 13 of the compressor 8. The capacity controller 14b receives a target interior temperature set by a passenger with the temperature adjust switch 21g and data from the sensors, calculates a target conditioned air temperature supplied from the air conditioning unit 7b, finds, according to the calculated target conditioned air temperature, a target air temperature at the exit of the evaporator 12, calculates a duty factor to bring an actual air temperature at the exit of the evaporator 12 to the calculated target air temperature at the exit of the evaporator 12, and transfers the calculated duty factor to the control valve 13.

In this way, the capacity controller 14b provides the control valve 13 with a control pulse signal having a duty factor that determines a coolant discharge of the compressor 8. If the capacity controller 14b provides the control valve 13 with a maximum capacity signal having a maximum duty factor of 100%, the valve plug 31a of the control valve 13 moves to the closed position. Then, no pressure is introduced from the discharge chamber 49 to the crankcase 48 through the pressure introducing path 54. As a result, the pressure of the crankcase 48 decreases, the swash plate 26d inclines to a maximum inclination angle, and the piston 27 takes a full-stroke position. Consequently, the discharge of the compressor 8 increases to the maximum.

If the capacity controller 14b provides the control valve 13 with a minimum discharge signal having a minimum duty factor of 0%, the valve plug 31a of the control valve 13 moves to an open position. Then, pressure is introduced from the discharge chamber 49 into the crankcase 48 through the pressure introducing path 54. As a result, the pressure of the crankcase 48 increases, the swash plate 26d inclines to a minimum inclination angle, and the piston 27 takes a destroke position. Consequently, the discharge of the compressor 8 decreases to the minimum.

In this way, the capacity controller 14b adjusts a duty factor to adjust a flow rate of high-pressure coolant to be introduced from the discharge chamber 49 into the crankcase 48 through the pressure introducing path 54, thereby controlling the coolant discharge of the compressor 8.

In a steady-state operation, the capacity controller 14b works in a normal mode to calculate a duty factor according to a target air temperature at the exit of the evaporator 12 and an actual air temperature at the exit of the evaporator 12 provided by the sensor 211. The capacity controller 14b may work in a minimum duty factor mode and a maximum duty factor mode. In the maximum duty factor mode, the capacity controller 14b maintains the maximum duty factor (100%). In the minimum duty factor mode, the capacity controller 14b maintains the minimum duty factor (0%).

Calculations of a steady-state torque and a start torque of the compressor 8 will be explained.

The torque calculator 14c calculates a drive torque (load torque) of the compressor 8. According to the embodiment, the torque calculator 14c calculates a start torque Tk during a predetermined period of time (four seconds in the embodiment) after a start of the compressor 8, and after the predetermined period of time, calculates a steady-state torque Ts (Tsn, Tsf).

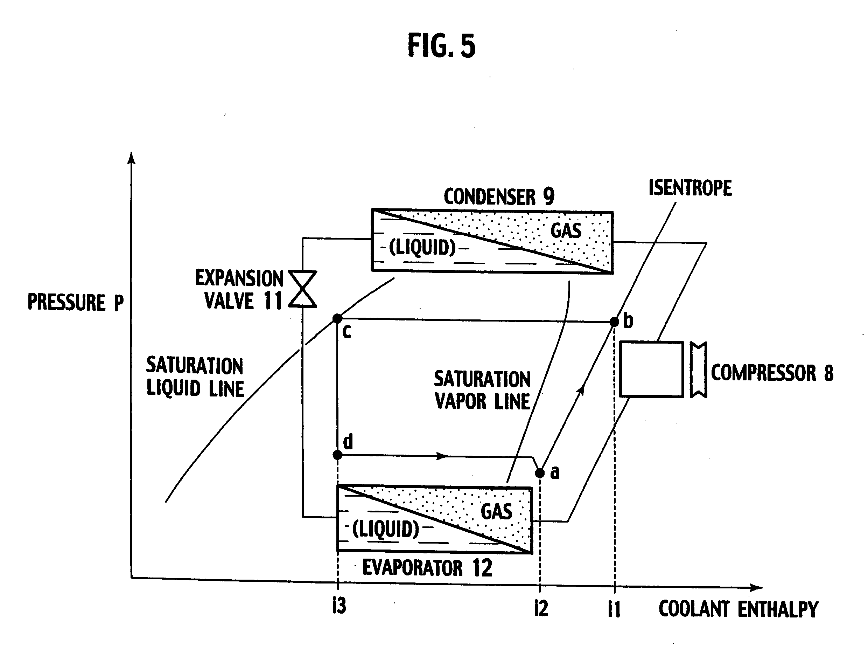

First, calculating a steady-state torque Ts (Tsn, Tsf) in a steady operation will be explained with reference to Figs. 5 to 11.

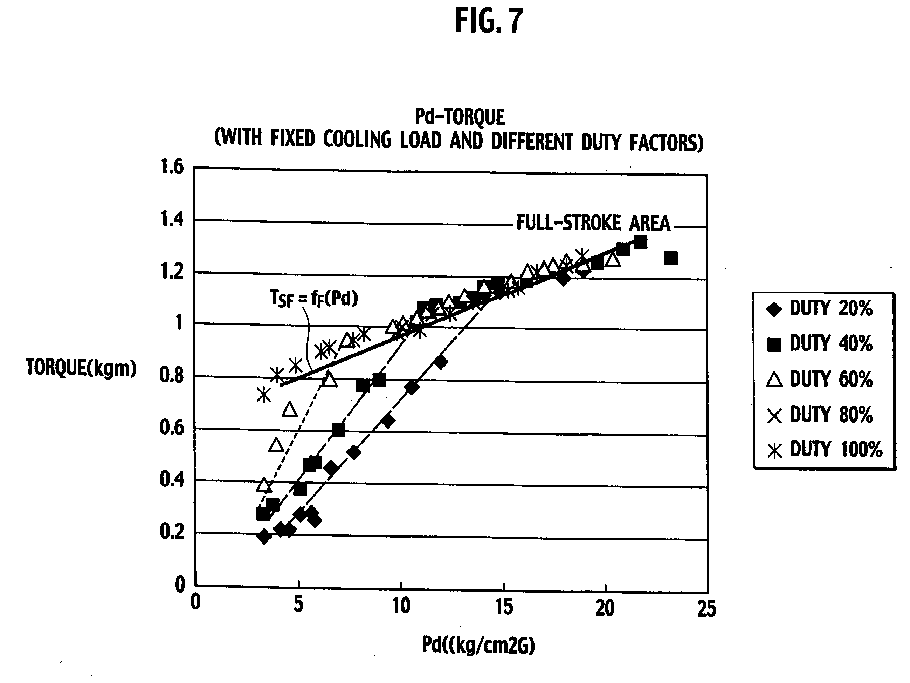

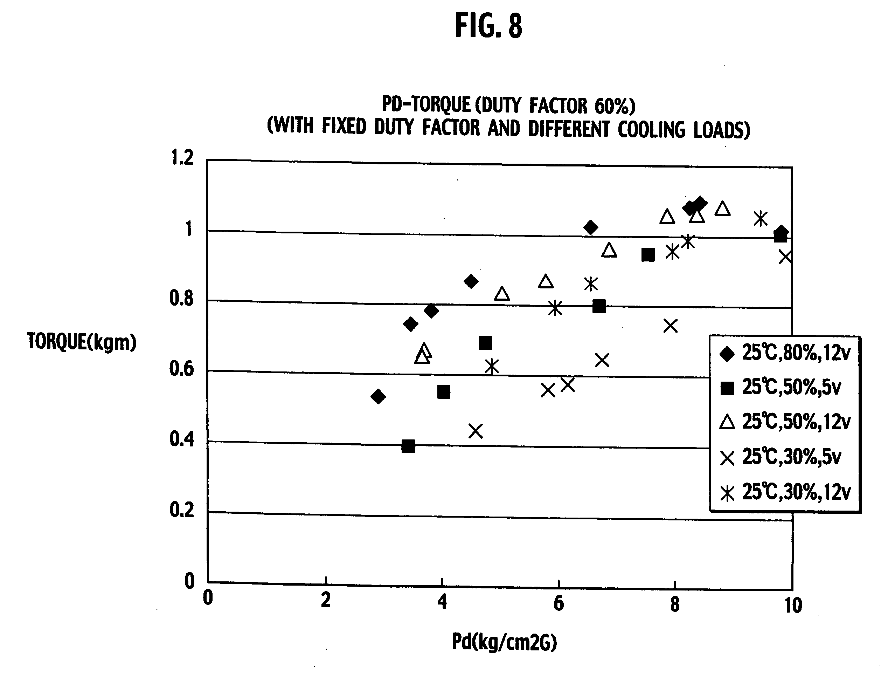

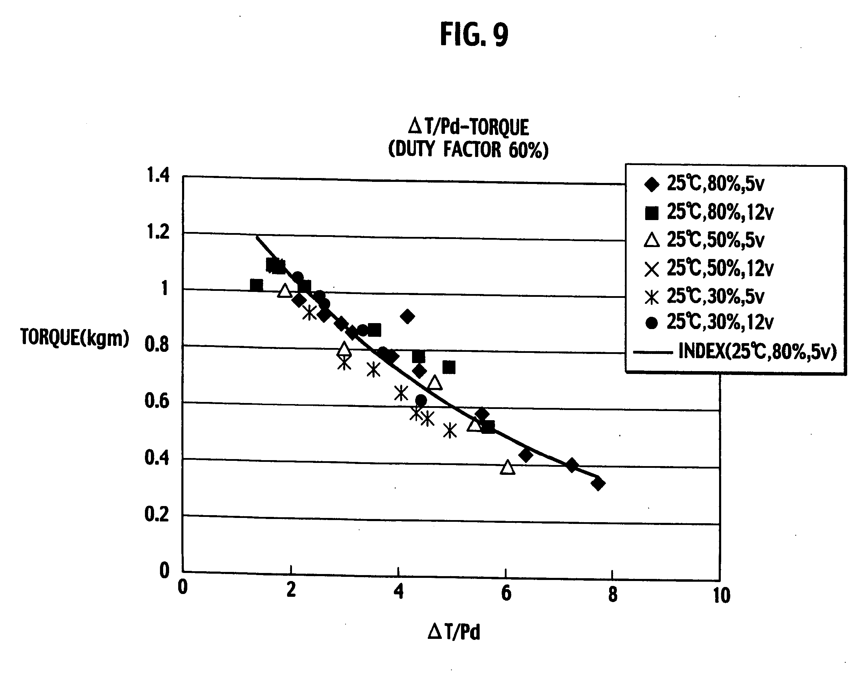

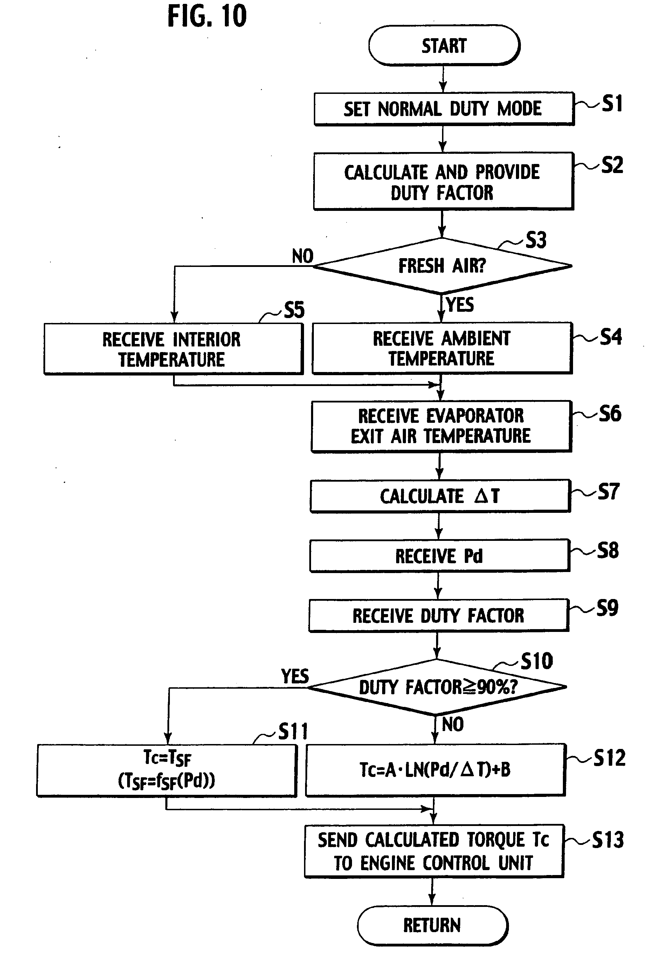

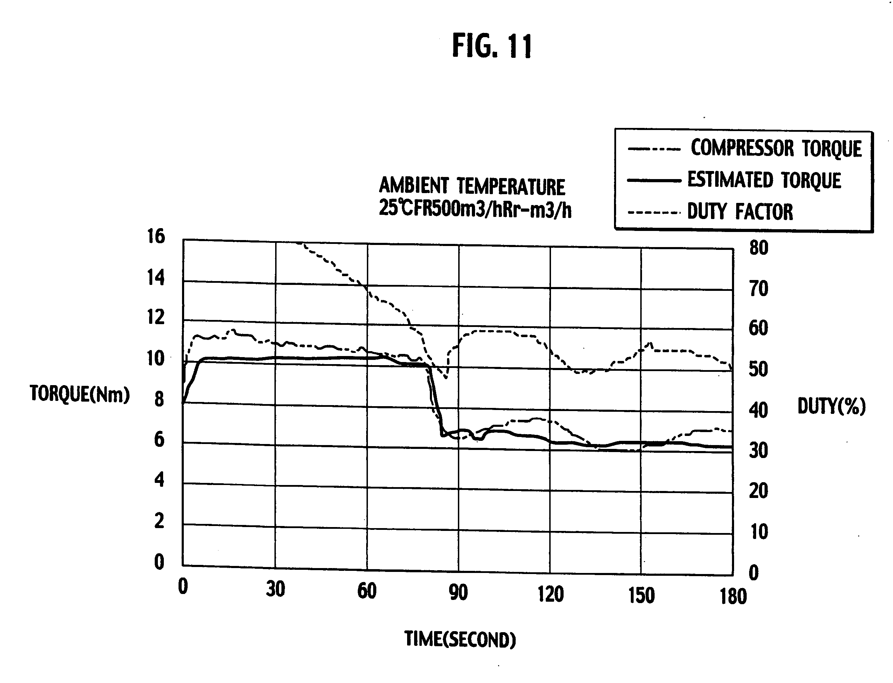

Figure 5 shows a Mollier chart of the refrigeration cycle 7a, Fig. 6 shows characteristic curves of the compressor suction pressure Ps and compressor discharge pressure Pd with different duty factors, Fig. 7 shows characteristic curves of the compressor discharge pressure Pd and torque with a constant refrigerating cycle load (evaporator load) and different duty factors, Fig. 8 shows the compressor discharge pressure Pd and torque with different refrigerating cycle loads (the load being determined by the temperature (°C) and humidity (%) of intake air of the evaporator 12 and a blower voltage (V)) and a fixed duty factor (60%), Fig. 9 shows a characteristic curve of torque and a ratio of evaporator temperature difference $\Delta T$ to the compressor discharge pressure Pd with a fixed duty factor of 60% and different refrigerating cycle loads (the load being determined by the temperature (°C) and humidity (%) of intake air of the evaporator 12 and a blower voltage (V)), Fig. 10 is a flowchart showing a process of calculating a steady-state torque, and Fig. 11 shows characteristic curves of torque estimated according to the embodiment and actual torque.

The embodiment calculates a steady-state torque Ts (Tsn, Tsf) according to torque expressions (12) and (13) to be explained later. The torque expressions (12) and (13) have, as input parameters, a temperature difference $\Delta T$ between air temperatures at the entrance and exit of the evaporator 12, a compressor discharge coolant pressure Pd, an external control signal having a duty factor for controlling the control valve 13, and the number of revolutions Nc of the compressor 8.

The torque expressions (12) and (13) will be explained.

A torque Ts of the variable capacity compressor 8 is theoretically expressed as follows:

$$\mathrm{Ts = (i1 - i2) \times Gr \times \ \eta\,m \,/\, Nc \quad ...(1)}$$

where i1 is an enthalpy of coolant discharged from the compressor 8, i2 is an enthalpy of coolant supplied to the compressor 8, Gr is a flow rate of the coolant, η m is the mechanical efficiency of the compressor 8, and Nc is the number of revolutions of the compressor 8.

As shown in Fig. 5, the enthalpy i1 of coolant discharged from the compressor 8 and the enthalpy i2 of coolant supplied to the compressor 8 may be expressible with functions i1 = f(Pd) and i2 = f(Ps). Accordingly, the expression (1) is written as follows:

$$\mathrm{Ts = \{f(Pd) - f(Ps)\} \times Gr \times \ \eta\,m \,/\, Nc \qquad ...(2)}$$

In the expression (2), η m changes according to a compression ratio (Pd/Ps) and the coolant flow rate Gr and is specific to the compressor 8. Nc is a known value, and therefore, the torque can be estimated if the compressor discharge pressure Pd, compressor suction pressure Ps, and coolant flow rate Gr are obtained.

The compressor discharge pressure Pd is readable from a detected value of the coolant pressure sensor 21n. According to the compressor 8 of the embodiment, the compressor suction pressure Ps is controlled by the duty factor of a control pulse signal supplied to the control valve 13, and therefore, the suction pressure Ps can be found from the compressor discharge pressure Pd and duty factor. As shown in Fig. 6, the compressor suction pressure Ps and compressor discharge pressure Pd follow a specific characteristic curve depending on a duty factor. Accordingly, the compressor suction pressure Ps can be approximated from the duty factor of an external control signal and the compressor discharge pressure Pd. Namely, the expression (2) can be written as follows:

$$Ts = \{f(Pd) - f(Pd,\ duty\ factor)\} \times Gr \times \eta\, m\, /\, Nc \qquad ...(3)$$

This expression (3) can be written as follows:

$$Ts = F1(Pd,\ duty\ factor) \times Gr \times \eta\, m\, /\, Nc \qquad ...(4)$$

Then, variables in the expression (4) are solved. Figure 7 shows characteristic curves of compressor discharge pressure Pd and torque Ts with the refrigeration cycle 7a (evaporator suction side) receiving a constant load defined by a temperature of 25°C, a humidity of 50%, and an air flow rate corresponding to a blower voltage of 5 V and with different duty factors. It is understood from Fig. 7 that the torque Ts can be estimated from the compressor discharge pressure Pd and duty factor.

With the constant load on the refrigeration cycle 7a (evaporator suction side), the coolant flow rate Gr can be expressed by a function f1(Pd, Ps) and η m by a function f2(Pd, Pd). Accordingly, the expression (4) can be written as follows:

$$Ts = F(Pd,\ duty\ factor)\, /\, Nc \qquad ...(5)$$

A change in torque due to a change in the refrigerating cycle load (evaporator suction load) will be examined. It is assumed that the temperature of intake air of the evaporator 12 is constant at 25°C. When the humidity of evaporator intake air and an air flow rate (a voltage of the blower fan motor 19) are changed, a correlation is established between the compressor discharge pressure Pd and the torque Ts as shown in Fig. 8. Namely, if torque changes in a variable range and if refrigerating cycle load (evaporator intake air load) changes, the coolant flow rate Gr changes. Accordingly, some elements are needed to estimate the coolant flow rate Gr. Such elements are examined from cooling performance based on evaporator load:

$$Qevap = (i3 - i2) \times Gr \qquad ...(6)$$

$$Gr = Qevap\, /\, (i3 - i2) \qquad ...(7)$$

where Qevap is an endothermic quantity of coolant in the evaporator, i3 is an enthalpy of coolant at the entrance of the evaporator 12, i2 is an enthalpy of coolant at the exit of the evaporator 12 (which is equal to the enthalpy of coolant on the suction side of the compressor 8, and therefore, the same reference mark is employed).

An endothermic quantity of air of the evaporator 12 is expressed as follows:

$$Qevap(air) = \{(\text{air endothermic quantity before evaporator}) - (\text{air}$$

$$\text{endothermic quantity after evaporator})\} \times (\text{evaporator air flow rate}) / (\text{air}$$

$$\text{specific volume})$$

The coolant endothermic quantity of the evaporator 12 is equal to the air endothermic quantity of the evaporator 12 and is proportional to a temperature difference between air at the evaporator entrance and air at the evaporator exit. Accordingly, the coolant endothermic quantity of the evaporator 12 can be estimated from the temperature difference ($\Delta t$) between air temperatures before and after the evaporator 12 and can be expressed as a function Qevap = $f(\Delta t)$.

As shown in Fig. 5, the enthalpy i3 at the entrance of the evaporator 12 is expressed as a function i3 = f(Pd), and the enthalpy at the exit of the evaporator 12 is expressed as a function i2 = f(Ps). Accordingly, the expression (7) can be written as follows:

$$Gr = f3(\Delta t) / f4(Pd) \cdot f(Pd, \text{duty factor})...(8)$$

The expression (8) includes a denominator that is a function of Pd and duty factor, and therefore, is written as follows:

$$Gr = f3(\Delta t) / F2(Pd, \text{duty factor}) \qquad ...(9)$$

From the expressions (9) and (4), the torque Ts can be expressed as follows:

$$Ts = F1(Pd, \text{duty factor}) \times \{f3(\Delta t) / F2(Pd, \text{duty factor})\} / Nc \quad ...(10)$$

The expression (10) can be written as follows:

$$Ts = f(\Delta t) / f(Pd, \text{duty factor}) / Nc \qquad ...(11)$$

Based on the expression (11), $\Delta t/Pd$ and torque Ts can be plotted as a graph of Fig. 9. This graph shows that differences in evaporator load (the humidity of intake air and an air flow rate) can be absorbed. In this way, the torque Ts of the compressor 8 may be calculated from an air temperature difference $\Delta t$ between the entrance and exit of the evaporator 12, a compressor discharge pressure Pd, the duty factor of a control pulse signal for controlling the control valve 13, and the number of revolutions Nc of the compressor 8.

To easily calculate the torque Ts of the compressor 8 during an idling operation and a fuel-cut decelerating operation, a constant value (a standard number of revolutions for idling and fuel-cut deceleration) is employed as the number of revolutions Nc of the compressor 8 in the expression (11). In addition, the temperature difference $\Delta t$ before and after the evaporator 12 and the compressor discharge pressure Pd are handled as variable terms. Values obtained from measurements on an actual vehicle with a given duty factor and temperature difference $\Delta t$ before and after the evaporator 12 are used as constant terms A and B to provide the following expression:

$$Ts = A \times LN(Pd / \Delta t) + B \qquad ...(12)$$

The torque calculator 14c stores, in an external or internal memory (not shown), the expression (12) and values for the constant terms A and B obtained by measurements under various conditions and calculates the torque Ts by entering data for the variable terms and constant terms of the expression (12).

The steady-state torque Tsn of the compressor 8 under a discharge capacity controlled state is dependent on the compressor discharge pressure Pd and the temperature difference Δt before and after the evaporator 12 as shown in the expression (12). The full-stroke torque (steady-state full-stroke torque) Tsf of the compressor 8 can be estimated from a function of only the compressor discharge pressure Pd like a fixed capacity compressor as follows:

$$\mathrm{Tsf = fsf(Pd)} \quad ...(13) \ (\mathrm{Fig.\ 7})$$

A process of calculating the steady-state torque Ts (during idling and fuel-cut deceleration) of the compressor 8 according to the expressions (12) and (13) will be explained with reference to Fig. 10.

A predetermined time (four seconds in this embodiment) after a start of the compressor 8, a start operation shifts to a steady operation, and the calculation of a steady-state torque Ts starts. In step S1 of Fig. 10, the capacity controller 14b sets a normal mode duty factor for the control valve 13. In step S2, the capacity controller 14b employs a normal controller 121 to calculate a target evaporator exit air temperature, calculates a duty factor according to the target evaporator exit air temperature and an actual evaporator exit air temperature, and provides the control valve 13 with a control signal having the calculated duty factor. In step S3, the intake controller 14f determines whether the intake door 40 is at the outside air introducing position or at the inside air circulating position according to information from the fresh air (FRE) switch 21e and recirculation (REC) switch 21f. If the intake door 40 is at the outside air introducing position, step S4 is carried out in which the torque calculator 14c receives a temperature detected by the ambient temperature sensor 21j as an evaporator entrance air temperature, delays and corrects the received temperature signal, and provides a recognized ambient temperature signal. If the intake door 40 is at the inside air circulating position, step S5 is carried out in which the torque calculator 14c receives a temperature detected by the interior temperature sensor 21i as an evaporator entrance air temperature signal, delays and corrects the received temperature signal, and provides a recognized interior temperature signal.

In step S6, the torque calculator 14c receives a temperature detected by the evaporator exit temperature sensor 21l as an evaporator exit air temperature signal, delays and corrects the received temperature signal, and provides a recognized evaporator exit temperature signal.

In step S7, the torque calculator 14c calculates a temperature difference Δt before and after the evaporator 12 according to the above-mentioned data. Namely, if the intake door 40 is at the outside air introducing position, the torque calculator 14c subtracts the recognized evaporator exit temperature from the recognized ambient temperature, to find determine the temperature difference Δt. If the intake door 40 is at the inside air circulating position, the torque calculator 14c subtracts the recognized evaporator exit temperature from the recognized interior temperature, to determine the temperature difference Δt.

In step S8, the torque calculator 14c fetches a pressure detected by the coolant pressure sensor 21n, delays and corrects the detected pressure signal, and provides a recognized compressor discharge pressure signal.

In step S9, the torque calculator 14c receives a duty factor of the control pulse signal provided by the capacity controller 14b to the control valve 13.

In step S10, the torque calculator 14c checks to see if the duty factor is equal to or greater than 90%. If the duty factor is equal to or greater than 90%, step S11 is carried out in which a steady-state full-stroke calculator 107 (Fig. 4) of the torque calculator 14c calculates a steady-state full-stroke torque Tsf according to the steady-state full-stroke torque expression (13) (Fig. 7). If the duty factor is smaller than 90%, step S12 is carried out in which a steady-state torque calculator 105 of the torque calculator 14c calculates a steady-state torque Ts according to the steady-state torque expression (12). In step S 13, the torque calculator 14c sends the calculated steady-state torque Tc = Ts (Tsn or Tsf) to the engine control unit 3. This process is repeated to calculate the steady-state torque Ts (Tsn or Tsf) of the variable capacity compressor 8 in real time. According to the sent steady-state torque Ts (Tsn or Tsf), the engine control unit 3 controls an intake air quantity (a fuel mixture supply quantity) so as to prevent engine stall and excessive idling in an idling mode.

A modification of the steady-state torque calculation will be explained. According to the modification, the torque calculator 14c stores the expression (11) in an external or internal memory (not shown), the expression (11) involving, as variables, an air temperature difference Δt between the entrance and exit of the evaporator 12, a compressor discharge pressure Pd, a duty factor, and the number of revolutions Nc of the compressor 8. By entering data received from the sensors into the variables of the expression (11), the torque calculator 14c calculates a torque of the compressor 8. The modification additionally employs the number of revolutions Nc of the compressor 8 as data for calculating a torque of the compressor 8. The modification can reduce the quantity of data to be stored in the memory. The modification can calculate a torque of the compressor 8 not only in the idling mode and fuel-cut deceleration mode of the air conditioner 6 but also in any other operation mode of the air conditioner 6.

The number of revolutions Nc of the compressor 8 in the expression (11) may be replaced with a constant value (a standard number of revolutions for idling and fuel-cut deceleration), and the replaced expression may be stored in the memory. This may reduce the quantity of data to input and make the calculation of the expression simpler for idling and fuel-cut deceleration in which the number of revolutions Nc of the compressor 8 is substantially constant.

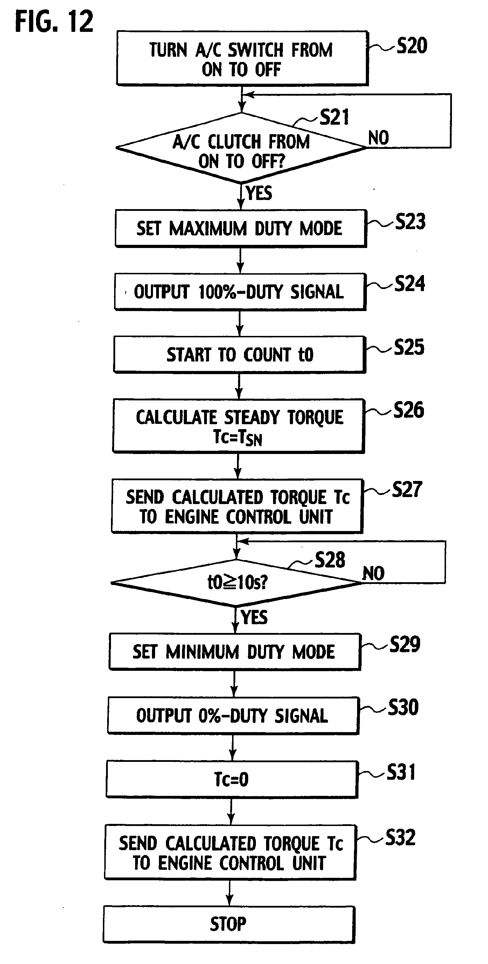

Calculating a start torque will be explained with reference to Figs. 12 to 18.

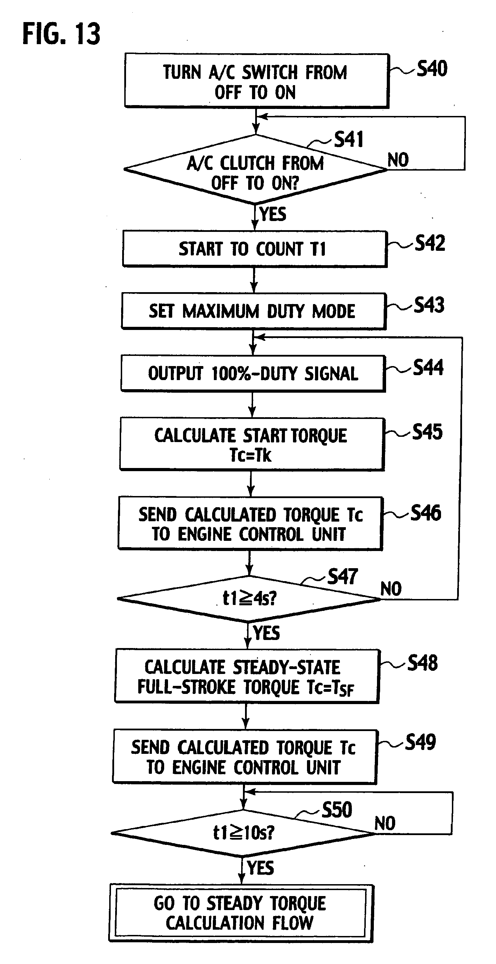

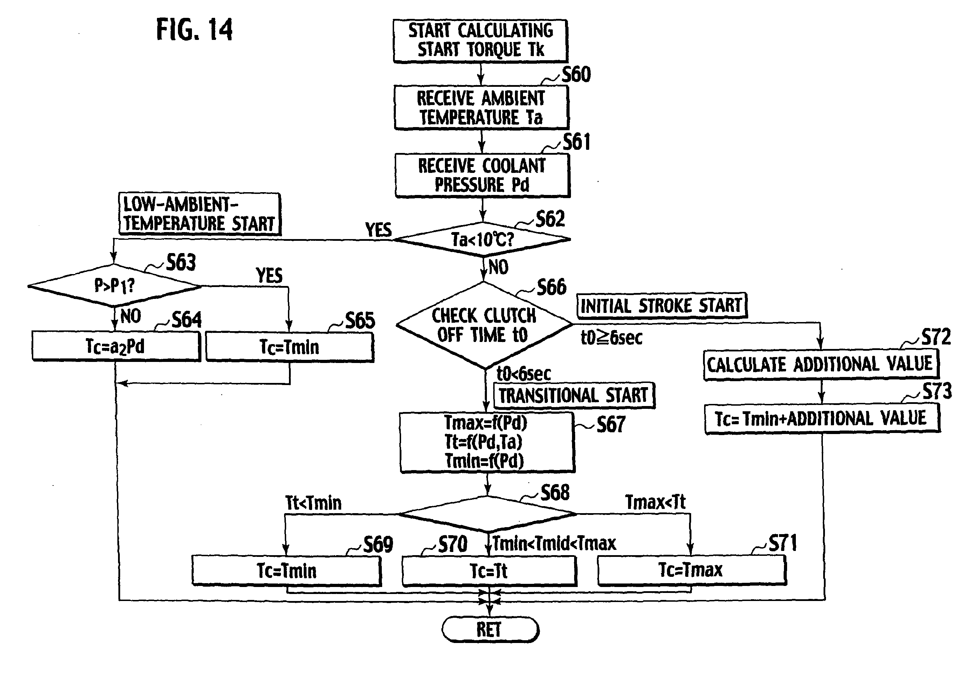

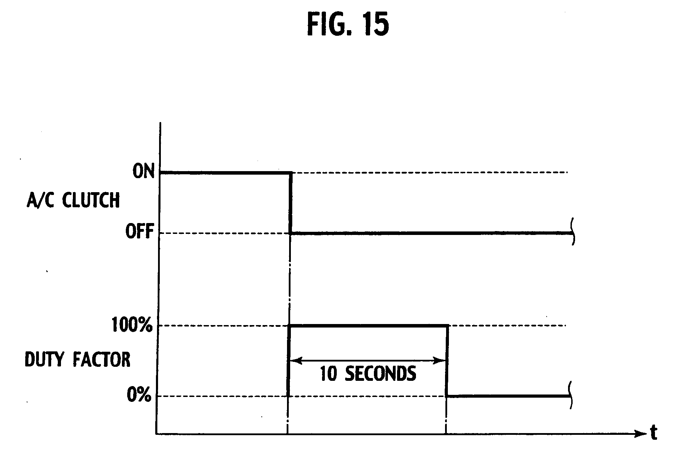

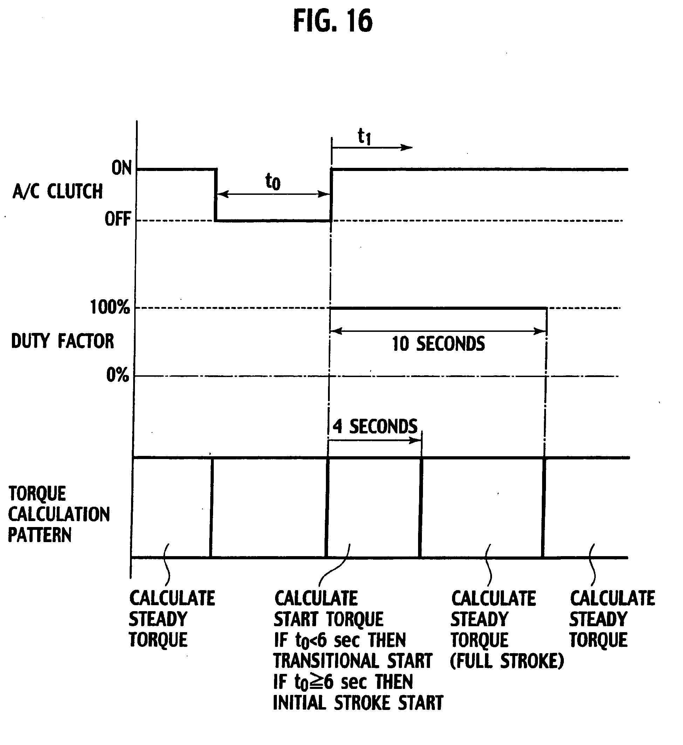

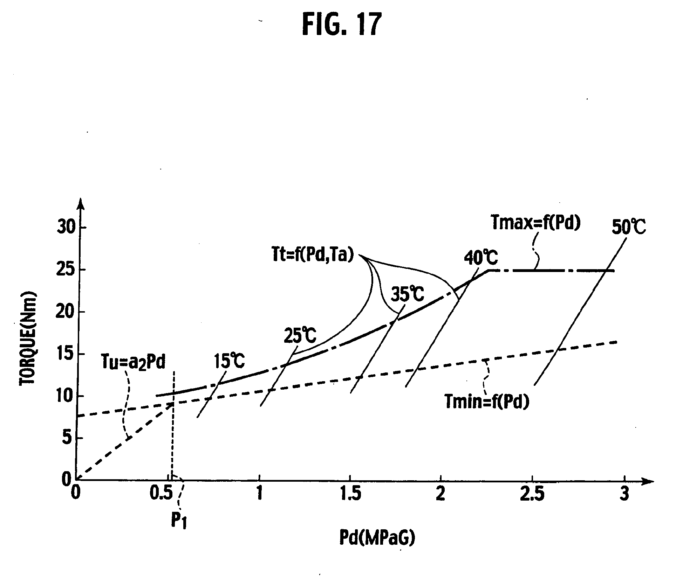

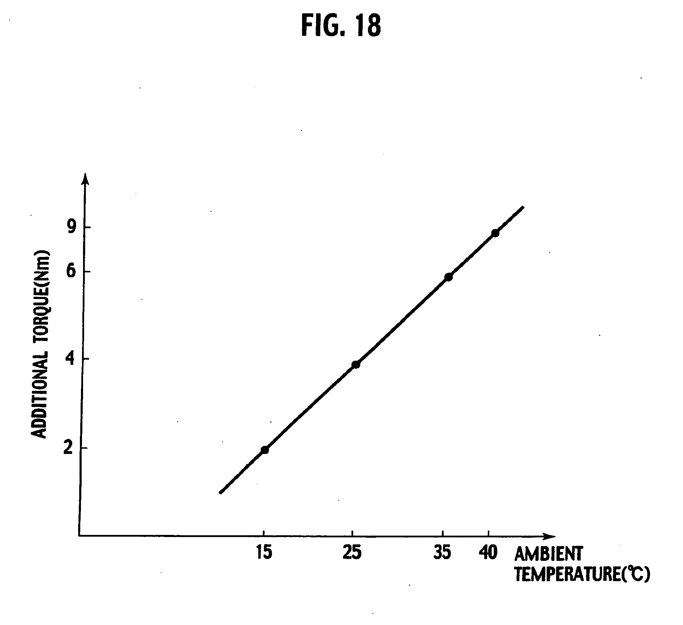

Figure 12 is a flowchart showing a process of stopping the variable capacity compressor 8, Fig. 13 is a flowchart showing a process of restarting the compressor 8, Fig. 14 is a flowchart showing a process of calculating a start torque of the compressor 8, Fig. 15 is a timing chart showing an ON/OFF state of the air-conditioner clutch 43 and an output duty factor to stop the compressor 8, Fig. 16 is a timing chart showing an ON/OFF state of the air-conditioner clutch 43, an output duty factor, and a torque calculating pattern when restarting the compressor 8, Fig. 17 shows experimental characteristic curves of start torque of the compressor 8, and Fig. 18 shows a characteristic curve of ambient temperature Ta and additional torque related to the compressor 8.

The embodiment is capable of calculating a start torque of the variable capacity compressor 8, even at a restart of the compressor 8 just after a stoppage thereof.

The inventor determined through tests that, under certain conditions, the crankcase 48 and suction chamber 50 of the compressor 8 gradually attain an equal pressure in a predetermined time (six seconds in the embodiment) after the compressor 8 has stopped, thereby returning the piston 27 to an initial position. Based on this finding, the inventor has verified through tests that a start torque is calculable by determining whether the piston 27 is at the initial position or at an intermediate position when the compressor 8 is restarted.

The method of calculating a start torque when an OFF time of the compressor 8 is less than a predetermined time (six seconds in this embodiment) and when the OFF time is equal to or longer than the predetermined time will be explained in detail.

Operation of the compressor controller 14a when the variable capacity compressor 8 stops is explained. In step S20 of Fig. 12, the air conditioner (A/C) switch 21a is switched from ON to OFF, and the compressor controller 14a starts a compressor stop process. In step S21, the compressor controller 14a determines whether or not the engine control unit 3 has changed the A/C clutch 43 from ON to OFF. If the A/C clutch 43 has been turned off, the capacity controller 14b selects a maximum duty factor mode in step S23 and provides the control valve 13 with a control pulse signal having a duty factor of 100% (Fig. 15) in step S24. In step S25, the counter 101 of the torque calculator 14c counts an OFF time t0 from the OFF time of the A/C clutch 43. In step S26, the steady-state torque calculator 105 of the torque calculator 14c calculates a steady-state torque Ts according to input data (a high pressure Pd and a temperature difference ∆T) and the steady-state torque expression (12), and in step S27, the torque calculator 14c provides the engine control unit 3 with the calculated torque Ts (= Tc). In step S28, the determiner 103 of the torque calculator 14c determines whether or not the OFF time t0 is equal to or greater than 10 seconds, and if not, repeats steps S26 and S27.

If ten seconds have passed after stoppage of the compressor 8, the capacity controller 14b selects a minimum duty factor mode in step S29 and provides the control valve 13 with a control pulse signal having a duty factor of 0% in step S30. The torque calculator 14c provides the engine control unit 3 with Tc = 0 as a present torque in steps S31 and S32.

In this way, the capacity controller 14b according to the embodiment provides the control valve 13 with an external control signal having a duty factor of 100% for 10 seconds (Fig. 15) after the A/C clutch 43 is turned off to stop the compressor 8. Namely, the control valve 13 is completely closed for ten seconds after stoppage of the compressor 8. This is to maintain the crankcase pressure Pc without abruptly changing the same when the compressor 8 is stopped. The control valve 13 at the closed position blocks the pressure introducing path 54 between the discharge chamber 49 and the crankcase 48, so that no high-pressure coolant flows from the discharge chamber 49 into the crankcase 48 through the pressure introducing path 54. On the other hand, the crankcase 48 and suction chamber 50 are always connected to each other through the pressure releasing path 55, and therefore, coolant in the crankcase 48 flows into the suction chamber 50 to equalize the pressure Pc of the crankcase 48 to the low pressure Ps of the suction chamber 50, thereby stabilizing the pressure Pc of the crankcase 48. Namely, the pressures of the crankcase 48 and suction chamber 50 gradually equalize with each other in a predetermined time (six seconds in this embodiment) after stoppage of the compressor 8. Due to this gradual pressure change, the swash plate 26d and piston 27 gradually return to their neutral positions in the predetermined time (six seconds in this embodiment) after the compressor 8 is stopped. It is, therefore, possible to estimate the positions of the swash plate 26d and piston 27 when the compressor 8 is stopped. Namely, a start torque Tk is correctly calculable for a time point at which the piston 27 is at the neutral position after the compressor 8 has been stopped and for a time point at which the piston 27 is moving to the neutral position.

The predetermined time of six seconds for the compressor 8 of this embodiment is experimentally obtained. The predetermined time may be changed depending on the compressor.

Operation of the compressor controller 14a when the variable capacity compressor 8 is restarted will be explained with reference to Fig. 13.

In step S40 of Fig. 13, the air-conditioner (A/C) switch 21a is switched from OFF to ON. In step S41, the compressor controller 14a determines whether or not the engine control unit 3 has changed the A/C clutch 43 from OFF to ON. If the A/C clutch 43 has been turned on, step S42 is carried out in which the counter 101 of the compressor controller 14a counts an ON time t1 from the ON time of the A/C clutch 43. In step S43, the capacity controller 14b selects the maximum duty factor mode, and in step S44, provides the control valve 13 with a control pulse signal having a duty factor of 100% (Fig. 16). The capacity controller 14b continuously provides the control pulse signal having a duty factor of 100% for ten seconds. In response to the control pulse signal, the control valve 13 moves to the totally closed position, to stabilize the low pressure of the suction chamber 50 and increase an estimation accuracy of a start torque. The reason why the control pulse signal of duty factor 100% is continuously provided for ten seconds is because a time in which the suction pressure Ps of the suction chamber 50 stabilizes after a start of the compressor 8 is dependent on the ambient temperature Ta. For example, if the ambient temperature Ta is 35°C, it takes about six seconds to stabilize the suction pressure Ps, and if the ambient temperature Ta is 15°C, it takes about eight seconds. Accordingly, ten seconds are needed to surely stabilize the suction pressure Ps irrespective of the ambient temperature Ta.

In step S45, the start torque calculator 109 of the compressor controller 14a calculates a start torque Tk and provides engine control unit 3 with the calculated start torque Tc = Tk. Step S47 continues the calculation of a start torque Tk for four seconds from the restart of the compressor 8. The details of the calculation of a start torque Tk will be explained later.

If step S47 determines that the ON time t1 is equal to or greater than four seconds, i.e., if four seconds have passed from the restart of the compressor 8, the start torque calculator 109 stops calculating a start torque Tk. In step S48, the steady-state full-stroke calculator 107 calculates a steady-state full-stroke torque Tsf according to the expression (13). This is because it is presumed that the piston 27 attains a full stroke four seconds after the restart of the compressor 8 at the duty factor of 100%. In step S49, the calculated steady-state full-stroke torque Tsf (= Tc) is sent to the engine control unit 3. Step S50 checks to see if the ON time t1 is equal to or greater than ten seconds. If the ON time t1 is equal to or greater than ten seconds, i.e., if ten seconds have passed from the restart of the compressor 8, the starting process ends, and the steady-state torque calculation process (Fig. 10) mentioned above starts.

The details of the calculation of a start torque Tk will be explained with reference to Fig. 14.

In step S60, the torque calculator 14c receives an ambient temperature Ta from the ambient temperature sensor 21j, and in step S61, a coolant pressure Pd from the coolant pressure sensor 21n.

In step S62, the torque calculator 14c checks to see if the ambient temperature Ta is lower than 10°C. If so, a low-ambient-temperature start torque calculator 111 of the torque calculator 14c calculates a low-ambient-temperature start torque according to a low-ambient-temperature start torque expression Tu and Tmin (Fig. 17). In step S63, the start torque calculator 14c checks to see if the discharge pressure Pd is equal to a predetermined pressure P1. If the discharge pressure Pd is lower than the predetermined pressure P1, step S64 is carried out to calculate a start torque according to a low-ambient-temperature start torque characteristic curve $Tu = a2 \cdot Pd$ (Fig. 17). If the discharge pressure Pd is larger than the predetermined pressure P1, step S64 is carried out to calculate a start torque according to a low-ambient-temperature start torque characteristic curve $Tmin = f(Pd)$. These expressions $Tu = a2 \cdot Pd$ and $Tmin = f(Pd)$ are obtained from dotted characteristic curves shown in Fig. 17. The characteristic curves Tu and Tmin are prepared from start torque values measured in tests that repeatedly restart the variable capacity compressor 8. The characteristic curves Tu and Tmin separate from each other at a point of Pd = P1.

If the ambient temperature Ta is equal to or greater than 10°C in step S62, step S66 is carried out to determine whether the OFF time t0 of the A/C clutch 43 is equal to or greater than six seconds. This is because, as mentioned above, the swash plate 26d and piston 27 gradually return to their initial positions in the predetermined time of about six seconds after the compressor 8 is turned off.

If the OFF time t0 is less than six seconds, step S67 is carried out in which a transitional start torque calculator 113 (Fig. 4) of the torque calculator 14c calculates a start torque Tt according to a transitional start torque expression Tt shown in Fig. 17. The transitional start torque expression Tt is based on characteristic curves Tt shown in Fig. 17 that are prepared from start torque values measured in tests that start the compressor 8 when the piston 27 is between the full-stroke position and the initial stroke position. The transitional start torque expression Tt includes, as input parameters, the ambient temperature Ta and high pressure (discharge pressure) Pd. Also calculated in step S67 are an upper limit value Tmax (when the piston 27 is at the full-stroke position) for the transitional start torque Tt and a lower limit value Tmin (when the piston 27 is at the initial position) for the transitional start torque Tt. Step S68 determines whether the calculated transitional start torque Tt is less than the upper limit Tmax and greater than the lower limit Tmin. If so, step S70 is carried out to adopt the transitional start torque Tt as a start torque Tc. If the transitional start torque Tt is greater than the upper limit Tmax in step S68, step S71 is carried out to adopt the upper limit Tmax as a start torque Tc. If the transitional start torque Tt is less than the lower limit Tmin in step S68, step S69 is carried out to adopt the lower limit Tmin as a start torque Tc. The transitional start torque Tt must be between the mechanical upper limit Tmax and lower limit Tmin. If the estimated transitional start torque Tt is abnormal to exceed the upper limit Tmax or lower the lower limit Tmin, the upper limit Tmax or lower limit Tmin is adopted as the start torque Tk (Tc).

If the OFF time t0 of the A/C clutch 43 is equal to or greater than six seconds in step S66, the piston 27 is at the initial position. Accordingly, an initial-stroke start torque calculator 115 (Fig. 4) of the torque calculator 14c calculates a start torque in steps S72 and S73 according to an initial-stroke start torque expression Tmin (Fig. 17).

This embodiment does not simply employ the start torque Tmin for the initial position of the piston 27. Instead, step S72 of Fig. 14 calculates an additional torque (additional value a1 · Pd + b) according to the ambient temperature Ta, and step S73 adds the additional torque to the start torque Tmin and provides the sum as the start torque Tk (Tc). This is because, on an actual vehicle the sensor for detecting the high pressure Pd is installed on, for example, the exit side of the condenser 9. In this case, although the compressor 8 is affected by heat generating components around the compressor 8, the pressure detecting sensor is free from the influence of the heat generating components, and therefore, the detected high pressure Pd is free from the influence of the heat. Namely, the additional value added in step S72 is based on the difference between an actual high pressure in the compressor 8 and the detected high pressure Pd. To compensate for the difference, step S72 determines the additional value from a correlation map (Fig. 18) according to the ambient temperature Ta detected by the ambient temperature sensor 21j arranged in the vicinity of a radiator grill of the vehicle, and step S73 adds the determined additional value to the start torque Tmin.

As explained above, the embodiment is based on the finding of the inventor that the swash plate 26d and piston 27 return to their initial positions in a predetermined time (six seconds in the embodiment) after the compressor 8 is switched from ON to OFF. The embodiment estimates, in steps S67 to S71 and S72 to S73, a start torque depending on whether or not an OFF time after the compressor 8 is turned off is less than the predetermined time. With this technique, the embodiment can correctly estimate a start torque even when the compressor 8 is restarted just after a stoppage thereof.

When the A/C clutch 43 is switched from ON to OFF, the embodiment controls the control valve 13 with an external control signal identical to a maximum capacity signal to achieve a full piston stroke. Namely, when the compressor 8 is turned off, the control valve 13 is totally closed. The totally closed control valve 13 blocks the pressure introducing path 54 between the discharge chamber 49 and the crankcase 48, and therefore, no high-pressure coolant flows from the discharge chamber 49 into the crankcase 48. At this time, coolant in the crankcase 48 gradually flows into the suction chamber 50 through the pressure releasing path 55 that always connects the crankcase 48 and suction chamber 50 to each other. As a result, the pressure Pc of the crankcase 48 becomes equal to the low pressure Ps of the suction chamber 50 and stabilizes. With this technique, the pressure Pc of the crankcase 48 never suddenly changes when the compressor 8 is turned off. Instead, the pressure Pc of the crankcase 48 gently and slowly changes to stabilize the behavior of the piston 27 when the compressor 8 is stopped. Consequently, a start torque can be correctly calculated.

If the A/C clutch 43 of the compressor 8 is turned on just after it is turned off, the control valve 13 is at the totally closed position so that the pressure Pc of the crankcase 48 is maintained at a low level. Accordingly, when the compressor 8 is restarted, the maximum capacity operation of the compressor 8 is immediately started. In this way, the embodiment achieves a quick start ability.

Within a short time (four seconds according to the embodiment), the swash plate 26d shifts to a maximum inclination angle, i.e., the piston 27 attains a full stroke. Accordingly, estimating a steady-state full-stroke torque in step S48 and a steady-state operation can be quickly achieved.

Effects of the embodiment will be explained.

(1) The method of calculating a torque of the variable capacity compressor 8 according to the embodiment counts (step S25) an OFF time t0 when the clutch 43 is turned off until the clutch 43 is next turned on, determines (step S66) whether or not the OFF time t0 is equal to or greater than a predetermined time (six seconds in this embodiment), and calculates (steps S67 to S71 and S72 to S73) a start torque depending on whether or not the OFF time t0 is less than the predetermined time.

The apparatus for calculating a torque of the variable capacity compressor 8 according to the embodiment includes the counter 101 (corresponding to step S25) to count an OFF time t0 when the clutch 43 is turned off until the clutch 43 is next turned on, the determiner 103 (corresponding to step S66) to determine whether or not the OFF time t0 is less than the predetermined time, and the start torque calculator 109 (corresponding to steps S67 to S71 and S72 to S73) to calculate a start torque depending on whether or not the OFF time t0 is less than the predetermined time.

In this way, the embodiment checks to see if an elapsed time after the compressor 8 stops is less than the predetermined time (six seconds in this embodiment) in which the pressure of the compressor 8 establishes an equilibrium state and the piston 27 returns to an initial position. With this technique, the embodiment can correctly calculate a start torque, even if the compressor 8 is restarted just after a stoppage thereof.

(2) The method of calculating a torque of the variable capacity compressor 8 according to the embodiment provides (step S 24) the pressure adjuster 13 with an external control signal for at least a predetermined time after the clutch 43 is turned off, the external control signal being identical to a maximum capacity signal to establish a full piston stroke, and when the clutch 43 is turned on, calculates (step S 45) a start torque of the compressor 8.

The apparatus for calculating a torque of the variable capacity compressor 8 according to the embodiment includes the capacity controller 14b to provide the control valve 13 serving, as a pressure adjuster, with an external control signal. The capacity controller 14b has the start-torque-calculate adminicle 123 (corresponding to step S24) to provide the pressure adjuster 13 with an external control signal for at least a predetermined time after the clutch 43 is turned off, the external control signal being identical to a maximum capacity signal to establish a full piston stroke. The apparatus also includes the torque calculator 14c for calculating a start torque of the compressor 8. The torque calculator 14c includes the start torque calculator 109 (corresponding to step S 45) configured to calculate a start torque of the compressor 8 when the clutch 43 is turned on.

With this configuration, no high-pressure coolant flows from the discharge chamber 49 into the crankcase 48, and coolant in the crankcase 48 flows into the suction chamber 50, so that the pressure Pc of the crankcase 48 gradually becomes equal to the pressure Ps of the suction chamber 50 and stabilizes. The pressure Pc of the crankcase 48 slowly changes without a sudden fluctuation, and the piston 27 gradually returns to its initial position in a predetermined time. Consequently, the embodiment can estimate the position of the piston 27 and correctly estimate a start torque of the compressor 8.

(3) A combination of the above-mentioned items (1) and (2) also forms a method of calculating a torque of the variable capacity compressor 8.

The combination method includes providing (S24) the control valve 13, serving as a pressure adjuster, with an external control signal after the clutch 43 is turned off, the external control signal being identical to a maximum capacity signal to establish a full piston stroke, counting (S25) an OFF time t0 when the clutch 43 is tuned off until the clutch 43 is next turned on, determining (S66) whether or not the OFF time t0 is less than a predetermined time, and calculating (S67 to S71, S72 to S73) a start torque of the compressor 8 depending on the determination.

The combination of the above-mentioned items (1) and (2) provides a combination apparatus for calculating a torque of the variable capacity compressor 8. The apparatus includes the torque calculator 14c to calculate torque of the compressor 8. The torque calculator 14c includes the counter 101 to count an OFF time t0 when the clutch 43 is tuned off until the clutch 43 is next turned on, the determiner 103 to determine whether or not the OFF time t0 is less than a predetermined time, and the start torque calculator 109 to calculate a start torque of the compressor 8 depending on the determination of the determiner 103. The apparatus also includes the capacity controller 14b to provide the control valve 13 with an external control signal. The capacity controller 14b includes the start-torque-calculate adminicle 123 to provide the control valve 13 with an external control signal for at least a predetermined time after the clutch 43 is turned off, the external control signal being identical to a maximum capacity signal to establish a full piston stroke.

These combination method and apparatus provide the combination effects of the above-mentioned items (1) and (2).

(4) According to the embodiment, the variable capacity compressor 8 includes the cylinder bores 51, the suction chamber 50 and discharge chamber 49 arranged on a top-dead-center side of the cylinder bores 51, the crankcase 48 arranged on a bottom-dead-center side of the cylinder bores 50, the piston 27 arranged in each cylinder bore 51, to suck coolant from the suction chamber 50 into the cylinder bore 51, compress the sucked coolant, and discharge the compressed coolant into the discharge chamber 49, the clutch 43 to be turned on to transmit driving force from the driving source 1 to each piston 27 so that the piston 27 operates and to be turned off to disconnect the driving force of the driving source 1 from each piston 27 so that the piston 27 stops, the pressure guiding path 54 to connect the discharge chamber 49 and crankcase 48 to each other, the pressure releasing path 55 to connect the crankcase 48 and suction chamber 50 to each other, and the control valve 13 serving as a pressure adjuster to change an opening of one of the pressure guiding path 54 and pressure releasing path 55 so as to change the pressure Pc of the crankcase 48, a piston stroke of each piston 27, and a discharge capacity.

(5) The start torque calculator (109) includes the transitional torque calculator 113, serving as a first start torque calculator (corresponding to steps S67 to S71), to calculate a start torque of the compressor 8 if the OFF time t0 is less than the predetermined time, and the initial-stroke start torque calculator 115, serving as a second start torque calculator (corresponding to steps S72 and S73), to calculate a start torque of the compressor 8 if the OFF time t0 is equal to or greater than the predetermined time.

(6) The transitional start torque calculator 113 uses the ambient temperature Ta and a high pressure Pd of the refrigeration cycle 7a as input parameters to calculate a start torque Tt = f(Ta, Pd). The initial-stroke start torque calculator 115 employs the high pressure Pd of the refrigeration cycle 7a as an input parameter to calculate a start torque Tmin = f(Pd). With such a small number of input parameters, the embodiment can calculate the start torque Tt or Tmin.

(7) The capacity controller 14b includes the normal controller 121 that controls the control valve 13 to bring an actual evaporator exit air temperature closer to a target evaporator exit air temperature. During a normal operation of the compressor 8, an actual evaporator exit air temperature is always brought closer to a target evaporator exit air temperature.

(8) The control valve 13, serving as a pressure adjuster, includes the valve plug 31a to change an opening of the pressure introducing path 54, as well as the pressure sensitive element 32 to move the valve plug 31a in a valve opening direction if a low pressure Ps of the refrigeration cycle 7a decreases and in a valve closing direction if the low pressure Ps increases.

Even if the external control signal provided by the capacity controller 14b is unchanged, the embodiment can ensure a coolant flow rate appropriate for the load on the evaporator 12 and can correctly estimate a start torque of the compressor 8.

According to the embodiment, the A/C clutch 43 is turned on and off by turning on and off the air-conditioner switch 21a. Instead of the air-conditioner switch 21a, any other on/off control element may be employed to turn the A/C clutch 43 on and off. For example, a modification of the embodiment may employ an element to turn off the A/C clutch 43 when an air temperature at the exit of the evaporator 12 decreases below a predetermined temperature (for example, 5°C). Another modification of the embodiment may employ an element to turn the A/C clutch 43 on and off according to an engine condition, such as an acceleration condition. These modifications frequently turn the A/C clutch 43 on and off to save energy. Namely, the modifications frequently restart the compressor 8 just after a stoppage thereof, and the start torque calculating method of the embodiment is particularly effective for such frequent ON/OFF operations of the compressor 8.

According to the embodiment, the control valve 13 includes the pressure sensitive part (diaphragm) 32 to sense a suction pressure Ps and control a valve opening as shown in Fig. 3. Instead of the suction pressure Ps, the control valve 13 may sense a discharge pressure (high pressure) Pd.

According to the embodiment, the swash plate 26d and piston 27 return to their initial positions when the compressor 8 establishes a pressure equilibrium and the initial positions are intermediate between a full-stroke position and a destroke position. The initial positions may be other optional positions instead of the intermediate positions. In this case, a start torque map is prepared according to the optional initial positions.

The embodiment employs the duty factor of a control pulse signal to externally control the discharge capacity of coolant of the compressor 8. Instead of the duty factor of a control pulse signal, any other electrical quantity may be used to control the discharge capacity of coolant of the compressor 8.

The embodiment employs a vehicle engine as a driving source of the compressor 8. Instead, the driving source of the compressor 8 may be an electric motor.

According to the embodiment, the capacity controller 14b and torque calculator 14c are arranged in the air-conditioner control unit 14. Instead, the capacity controller 14b and torque calculator 14c may be arranged in the engine control unit 3. It is also possible to arrange the capacity controller 14b and torque calculator 14c separately.

Although the present invention has been described above by reference to certain embodiments, the present invention is not limited to them.

The embodiments are only for illustrative purposes and are not intended to limit the present invention.

The invention is related to an apparatus for calculating torque of a variable capacity compressor, the compressor including a suction chamber, a discharge chamber, a piston to draw coolant from the suction chamber, compress the drawn coolant, and discharge the compressed coolant into the discharge chamber, a clutch configured to be turned on to transmit driving force from a driving source to the piston so that the piston operates and to be turned off to disconnect the driving force of the driving source from the piston so that the piston stops, and a pressure adjuster to adjust a back pressure introduced from the discharge chamber to the back of the piston and thereby adjust a stroke of the piston. The apparatus comprises a counter configured to count an OFF time when the clutch is turned off until the clutch is next turned on; a determiner configured to determine whether the OFF time is less than a predetermined time; and a start torque calculator configured to calculate a start torque of the compressor depending on the determination of the determiner.

Preferably, the predetermined time is an experimentally obtained period of time between when the clutch is turned off and when a pressure equilibrium state is established in the variable capacity compressor, so as to return the piston to an initial position.

Further preferably, the start torque calculator comprises a first start torque calculator configured to calculate a start torque when the OFF time is less than the predetermined time; and a second start torque calculator configured to calculate a start torque when the OFF time is equal to or greater than the predetermined time.

More preferably, the first start torque calculator being configured to assume that the piston is between the initial position and a full-stroke position and calculates a start torque according to a first start torque expression; and the second start torque calculator being configured to assume that the piston is at the initial position and calculates a start torque according to a second start torque expression.

Still further preferably, the first start torque calculator employs an ambient temperature and a high pressure of a refrigeration cycle as input parameters to calculate a start torque; and the second start torque calculator employs the high pressure of the refrigeration cycle as an input parameter to calculate a start torque.

The invention is further related to an apparatus for calculating torque of a variable capacity compressor, the compressor including a suction chamber, a cylinder bore, a discharge chamber, a piston to draw coolant from the suction chamber into the cylinder bore, compress the drawn coolant, and discharge the compressed coolant into the discharge chamber, a clutch configured to be turned on to transmit driving force from a driving source to the piston so that the piston operates and to be turned off to disconnect the driving force of the driving source from the piston so that the piston stops, and a pressure adjuster to adjust a back pressure introduced from the discharge chamber to the back of the piston and thereby adjust a stroke of the piston. The apparatus comprises a capacity controller including an start-torque-calculate adminicle configured to provide the pressure adjuster with an external control signal for at least a predetermined time after the clutch is turned off, the external control signal being identical to a maximum capacity signal to establish a full piston stroke; and a torque calculator having a start torque calculator configured to calculate a start torque of the compressor when the clutch is turned on.

The invention is additionally related to an apparatus for calculating torque of a variable capacity compressor, the compressor including a suction chamber, a cylinder bore, a discharge chamber, a piston to draw coolant from the suction chamber into the cylinder bore, compress the drawn coolant, and discharge the compressed coolant into the discharge chamber, a clutch configured to be turned on to transmit driving force from a driving source to the piston so that the piston operates and to be turned off to disconnect the driving force of the driving source from the piston so that the piston stops, and a pressure adjuster to adjust a back pressure introduced from the discharge chamber to the back of the piston and thereby adjust a stroke of the piston. The apparatus comprises a torque calculator configured to calculate torque of the compressor and includes a counter configured to count an OFF time when the clutch is turned off until the clutch is next turned on; a determiner configured to determine whether the OFF time is less than a predetermined time; and a start torque calculator configured to calculate a start torque of the compressor depending on the determination of the determiner; and a capacity controller configured to provide the pressure adjuster with an external control signal. The capacity controller includes a start-torque-calculate adminicle configured to provide the pressure adjuster with an external control signal for at least a predetermined time after the clutch is turned off, the external control signal being identical to a maximum capacity signal to establish a full piston stroke.

More preferably, the clutch is turned off when an evaporator exit temperature is equal to or less than a predetermined temperature.

Further preferably, the pressure adjuster comprises a valve plug configured to change an opening of a path between the discharge chamber and the back side of the piston; and a pressure sensitive element configured to move the valve plug in a valve opening direction when a low pressure of the refrigeration cycle decreases and in a valve closing direction when the low pressure increases.

Still further preferably, when the compressor is in a steady-state operation, the capacity controller controls the pressure adjuster to bring an actual evaporator exit temperature closer to a target evaporator exit temperature.

The invention relates further to a method of calculating torque of a variable capacity compressor, the compressor including a suction chamber, a cylinder bore, a discharge chamber, a piston to draw coolant from the suction chamber into the cylinder bore, compress the draw coolant, and discharge the compressed coolant into the discharge chamber, a clutch configured to be turned on to transmit driving force from a driving source to the piston so that the piston operates and to be turned off to disconnect the driving force of the driving source from the piston so that the piston stops, and a pressure adjuster to adjust a back pressure introduced from the discharge chamber to the back of the piston and thereby adjust a stroke of the piston, the method comprises counting an OFF time when the clutch is turned off until the clutch is next turned on; determining whether the OFF time is less than a predetermined time; and calculating a start torque of the compressor depending on the determination.

Further preferably, the predetermined time is an experimentally obtained period of time between when the clutch is turned off and when a pressure equilibrium state is established in the variable capacity compressor to return the piston to an initial position.

Preferably, calculating a start torque of the compressor depending on the determination comprises when the OFF time is less than the predetermined time, assuming that the piston is between the initial position and a full-stroke position and calculating a start torque according to a first start torque expression; and when the OFF time is equal to or greater than the predetermined time, assuming that the piston is at the initial position and calculating a start torque according to a second start torque expression.

More preferably, calculating a start torque of the compressor depending on the determination comprises when the OFF time is less than the predetermined time, employing an ambient temperature and a high pressure of a refrigeration cycle as input parameters to calculate a start torque; and when the OFF time is equal to or greater than the predetermined time, employing the high pressure of the refrigeration cycle as an input parameter to calculate a start torque.

In addition, the invention relates to a method of calculating torque of a variable capacity compressor, the compressor including a suction chamber, a cylinder bore, a discharge chamber, a piston to draw coolant from the suction chamber into the cylinder bore, compress the drawn coolant, and discharge the compressed coolant into the discharge chamber, a clutch configured to be turned on to transmit driving force from a driving source to the piston so that the piston operates and to be turned off to disconnect the driving force of the driving source from the piston so that the piston stops, and a pressure adjuster to adjust a back pressure introduced from the discharge chamber to the back of the piston and thereby adjust a stroke of the piston. The method comprises providing the pressure adjuster with an external control signal for at least a predetermined time after the clutch is turned off, the external control signal being identical to a maximum capacity signal to establish a full piston stroke; and calculating a start torque of the compressor when the clutch is turned on.

The invention relates further to a method of calculating torque of a variable capacity compressor, the compressor including a suction chamber, a cylinder bore, a discharge chamber, a piston to suck coolant from the suction chamber into the cylinder bore, compress the sucked coolant, and discharge the compressed coolant into the discharge chamber, a clutch to be turned on to transmit driving force from a driving source to the piston so that the piston operates and to be turned off to disconnect the driving force of the driving source from the piston so that the piston stops, and a pressure adjuster to adjust a back pressure introduced from the discharge chamber to the back of the piston and thereby adjust a piston stroke. The method comprises providing the pressure adjuster with an external control signal after the clutch is turned off from an ON state, the external control signal being identical to a maximum capacity signal to establish a full piston stroke; counting an OFF time when the clutch is turned off until the clutch is next turned on; determining whether the OFF time is less than a predetermined time; and calculating a start torque of the compressor depending on the determination.

Further preferably, a time for providing the external control signal identical to the maximum capacity signal is longer than the predetermined time.

More preferably, the clutch is turned off when an evaporator exit temperature is equal to or lower than a predetermined temperature.

Still further preferably, the pressure adjuster comprises a valve plug configured to change an opening of a path between the discharge chamber and the back side of the piston; and a pressure sensitive element configured to move the valve plug in a valve opening direction when a low pressure of the refrigeration cycle decreases and in a valve closing direction when the low pressure increases.

**Claims**

1. An apparatus for calculating torque of a variable capacity compressor (8), the compressor (8) including a suction chamber (50), a cylinder bore (51), a discharge chamber (49), a piston (27) to draw coolant from the suction chamber (50) into the cylinder bore (51), compress the drawn coolant, and discharge the compressed coolant into the discharge chamber (49), and a torque calculator,
   **characterized by**
   a clutch (43) configured to be turned on to transmit driving force from a driving source (1) to the piston (27) so that the piston (27) operates and to be turned off to disconnect the driving force of the driving source (1) from the piston (27) so that the piston (27) stops, and a pressure adjuster (13) to adjust a back pressure (Pc) introduced from the discharge chamber (49) to the back of the piston (27) and thereby adjust a stroke of the piston, and
   a capacity controller (14b) including a start-torque-calculate adminicle (123) configured to provide the pressure adjuster (13) with an external control signal for at least a predetermined time after the clutch (43) is turned off, the external control signal being identical to a maximum capacity signal to establish a full piston stroke; wherein
   the torque calculator (14c) has a start torque calculator (109) configured to calculate a start torque of the compressor (8) when the clutch (43) is turned on.

2. The apparatus of claim 1, **characterized in that** the clutch (43) is turned off when an evaporator exit temperature is equal to or less than a predetermined temperature.

3. The apparatus of claim 1 or 2, **characterized in that** the pressure adjuster (13) comprises:

   a valve plug (31 a) configured to change an opening of a path between the discharge chamber (49) and the back side of the piston (27); and
   a pressure sensitive element (32) configured to move the valve plug (31 a) in a valve opening direction when a low pressure (Ps) of the refrigeration cycle (7a) decreases and in a valve closing direction when the low pressure (Ps) increases.

4. The apparatus of any one of claims 1 to 3, **characterized in that** when the compressor (8) is in a steady-state operation:

   the capacity controller (14b) controls the pressure adjuster (13) to bring an actual evaporator exit temperature closer to a target evaporator exit temperature.

5. A method of calculating torque of a variable capacity compressor (8), the compressor (8) including a suction chamber (50), a cylinder bore (51), a discharge chamber (49), a piston (27) to draw coolant from the suction chamber (50) into the cylinder bore (51), compress the drawn coolant, and discharge the compressed coolant into the discharge chamber (49), a clutch (43) configured to be turned on to transmit driving force from a driving source (1) to the piston (27) so that the piston (27) operates and to be turned off to disconnect the driving force of the driving source (1) from the piston (27) so that the piston (27) stops, and a pressure adjuster (13) to adjust a back pressure (Pc) introduced from the discharge chamber (49) to the back of the piston (27) and thereby adjust a stroke of the piston, the method comprising:

providing the pressure adjuster (13) with an external control signal for at least a predetermined time after the clutch (43) is turned off, the external control signal being identical to a maximum capacity signal to establish a full piston stroke; and
calculating a start torque of the compressor (8) when the clutch (43) is turned on.

6. The method of claim 5, **characterized by** turning off the clutch (43) when an evaporator exit temperature is equal to or lower than a predetermined temperature.

7. The method of any one of claims 5 and 6, **characterized in that** the pressure adjuster (13) comprises:

a valve plug (31a) configured to change an opening of a path between the discharge chamber (49) and the back side of the piston (27); and
a pressure sensitive element (32) configured to move the valve plug (31 a) in a valve opening direction when a low pressure (Ps) of the refrigeration cycle (7a) decreases and in a valve closing direction when the low pressure (Ps) increases.

# FIG. 1

# FIG. 2

PISTON STROKE

# FIG. 3

34

31a

30

CRANKCASE 48 (Pc)

54

31

32

SUCTION CHAMBER 50 (Ps)

⊕

ELECTROMAGNETIC FORCE

35

CONTROL SIGNAL (DUTY FACTOR)

33

⇐ DISCHARGE CHAMBER 49 (Pd)

13

14b

CAPACITY CONTROLLER

# FIG. 4

/14a

**COMPRESSOR CONTROLLER**

~14c

**TORQUE CALCULATOR**

| COUNTER | ~101 |

| DETERMINER | ~103 |

| STEADY-STATE TORQUE CALCULATOR | ~105 |

| STEADY-STATE FULL-STROKE CALCULATOR | ~107 |

~109

**START TORQUE CALCULATOR**

| LOW-AMBIENT-TEMPERATURE START TORQUE CALCULATOR | ~111 |

| TRANSITIONAL START TORQUE CALCULATOR | ~113 |

| INITIAL-STROKE START TORQUE CALCULATOR | ~115 |

~14b

**CAPACITY CONTROLLER**

| NORMAL CONTROLLER | ~121 |

| START-TORQUE-CALCULATE ADMINICLE | ~123 |

| START CONTROLLER | ~125 |

# FIG. 5

FIG.6

DUTY CHARACTERISTICS

duty 0%
duty 20%
duty 40%
duty 60%
duty 80%
duty 100%

Ps (kg/cm2G)

Pd(kg/cm2G)

# FIG. 7

Pd-TORQUE
(WITH FIXED COOLING LOAD AND DIFFERENT DUTY FACTORS)

$T_{SF} = f_F(Pd)$

FULL-STROKE AREA

TORQUE(kgm)

Pd((kg/cm2G)

◆ DUTY 20%
■ DUTY 40%
△ DUTY 60%
✕ DUTY 80%
✳ DUTY 100%

EP 1 867 875 A2

# FIG. 8

PD-TORQUE (DUTY FACTOR 60%)
(WITH FIXED DUTY FACTOR AND DIFFERENT COOLING LOADS)

Legend:
- ◆ 25℃,80%,12v
- ■ 25℃,50%,5v
- △ 25℃,50%,12v
- ✕ 25℃,30%,5v
- ✳ 25℃,30%,12v

X-axis: Pd(kg/cm2G)
Y-axis: TORQUE(kgm)

EP 1 867 875 A2

# FIG. 9

ΔT/Pd-TORQUE
(DUTY FACTOR 60%)

Legend:
- ◆ 25℃,80%,5v
- ■ 25℃,80%,12v
- △ 25℃,50%,5v
- ✕ 25℃,50%,12v
- ✳ 25℃,30%,5v
- ● 25℃,30%,12v
- —— INDEX(25℃,80%,5v)

TORQUE(kgm)

ΔT/Pd

EP 1 867 875 A2

## FIG. 10

```
            START
              │
              ▼
   ┌──────────────────────┐
   │  SET NORMAL DUTY MODE │──── S1
   └──────────────────────┘
              │
              ▼
   ┌──────────────────────┐
   │  CALCULATE AND PROVIDE│──── S2
   │      DUTY FACTOR      │
   └──────────────────────┘
              │
              ▼
         ◇────────────◇
    NO   │ FRESH AIR? │─── S3
 ┌───────│            │
 │        ◇────────────◇
 │            │ YES
 │            ▼
 ┌──────────────────┐      ┌──────────────────┐
 │ RECEIVE INTERIOR │──S5  │ RECEIVE AMBIENT  │── S4
 │   TEMPERATURE    │      │   TEMPERATURE    │
 └──────────────────┘      └──────────────────┘
          │                        │
          └───────────┬────────────┘
                      ▼
          ┌──────────────────────┐
          │  RECEIVE EVAPORATOR   │── S6
          │  EXIT AIR TEMPERATURE │
          └──────────────────────┘
                      │
                      ▼
          ┌──────────────────────┐
          │     CALCULATE ΔT      │── S7
          └──────────────────────┘
                      │
                      ▼
          ┌──────────────────────┐
          │      RECEIVE Pd       │── S8
          └──────────────────────┘
                      │
                      ▼
          ┌──────────────────────┐
          │   RECEIVE DUTY FACTOR │── S9
          └──────────────────────┘
                      │
                      ▼
         ◇──────────────────────◇
 YES     │  DUTY FACTOR≧90%?     │─── S10
┌────────│                      │
│         ◇──────────────────────◇
│                │ NO
│                ▼
┌──────────────────┐      ┌──────────────────────┐
│    Tc=T_SF       │──S11 │ Tc=A·LN(Pd/ΔT)+B     │── S12
│  (T_SF=f_SF(Pd)) │      │                      │
└──────────────────┘      └──────────────────────┘
          │                        │
          └───────────┬────────────┘
                      ▼
          ┌──────────────────────┐
          │ SEND CALCULATED TORQUE Tc │── S13
          │  TO ENGINE CONTROL UNIT   │
          └──────────────────────┘
                      │
                      ▼
                  ┌────────┐
                  │ RETURN │
                  └────────┘
```

$Tc = T_{SF}$
$(T_{SF} = f_{SF}(Pd))$

$Tc = A \cdot LN(Pd/\Delta T) + B$

# FIG. 11

AMBIENT TEMPERATURE
25°CFR500m3/hRr-m3/h

- - - - COMPRESSOR TORQUE
——— ESTIMATED TORQUE
- - - - - DUTY FACTOR

TORQUE(Nm)

DUTY(%)

TIME(SECOND)

EP 1 867 875 A2

## FIG. 12

```
┌──────────────────────────┐
│  TURN A/C SWITCH FROM    │──S20
│       ON TO OFF          │
└──────────────────────────┘
            │
            ▼
      ╱───────────╲
     ╱  A/C CLUTCH  ╲──S21    NO
     ╲  FROM ON TO  ╱──────────►
      ╲   OFF?    ╱
       ╲─────────╱
           │YES
           ▼
┌──────────────────────────┐
│   SET MAXIMUM DUTY MODE   │──S23
└──────────────────────────┘
            │
            ▼
┌──────────────────────────┐
│   OUTPUT 100%-DUTY SIGNAL │──S24
└──────────────────────────┘
            │
            ▼
┌──────────────────────────┐
│      START TO COUNT t0    │──S25
└──────────────────────────┘
            │
            ▼
┌──────────────────────────┐
│  CALCULATE STEADY TORQUE  │──S26
│        Tc=TSN             │
└──────────────────────────┘
            │
            ▼
┌──────────────────────────┐
│  SEND CALCULATED TORQUE Tc│──S27
│   TO ENGINE CONTROL UNIT  │
└──────────────────────────┘
            │
            ▼
      ╱───────────╲
     ╱   t0≧10s?   ╲──S28  NO
     ╲            ╱──────────►
      ╲─────────╱
           │YES
           ▼
┌──────────────────────────┐
│   SET MINIMUM DUTY MODE   │──S29
└──────────────────────────┘
            │
            ▼
┌──────────────────────────┐
│   OUTPUT 0%-DUTY SIGNAL   │──S30
└──────────────────────────┘
            │
            ▼
┌──────────────────────────┐
│         Tc=0             │──S31
└──────────────────────────┘
            │
            ▼
┌──────────────────────────┐
│  SEND CALCULATED TORQUE Tc│──S32
│   TO ENGINE CONTROL UNIT  │
└──────────────────────────┘
            │
            ▼
┌──────────────────────────┐
│          STOP            │
└──────────────────────────┘
```

## FIG. 13

```
┌─────────────────────────────┐
│   TURN A/C SWITCH FROM       │───S40
│        OFF TO ON             │
└─────────────────────────────┘
              │
              ▼
         ╱────────────╲   ~S41
        ╱ A/C CLUTCH FROM╲────NO
        ╲   OFF TO ON?   ╱
         ╲──────────────╱
              │YES
              ▼
┌─────────────────────────────┐
│      START TO COUNT T1       │───S42
└─────────────────────────────┘
              │
              ▼
┌─────────────────────────────┐
│    SET MAXIMUM DUTY MODE     │───S43
└─────────────────────────────┘
              │
              ▼
┌─────────────────────────────┐
│    OUTPUT 100%-DUTY SIGNAL   │───S44
└─────────────────────────────┘
              │
              ▼
┌─────────────────────────────┐
│    CALCULATE START TORQUE    │───S45
│           Tc=Tk              │
└─────────────────────────────┘
              │
              ▼
┌─────────────────────────────┐
│   SEND CALCULATED TORQUE Tc  │───S46
│    TO ENGINE CONTROL UNIT    │
└─────────────────────────────┘
              │
              ▼
         ╱────────────╲   ~S47
        ╱    t1≧4s?    ╲────NO
         ╲──────────────╱
              │YES
              ▼
┌─────────────────────────────┐
│    CALCULATE STEADY-STATE    │───S48
│  FULL-STROKE TORQUE Tc=TSF   │
└─────────────────────────────┘
              │
              ▼
┌─────────────────────────────┐
│   SEND CALCULATED TORQUE Tc  │───S49
│    TO ENGINE CONTROL UNIT    │
└─────────────────────────────┘
              │
              ▼
         ╱────────────╲   ~S50
        ╱   t1≧10s?    ╲────NO
         ╲──────────────╱
              │YES
              ▼
┌─────────────────────────────┐
│     GO TO STEADY TORQUE      │
│     CALCULATION FLOW         │
└─────────────────────────────┘
```

# FIG. 14

```
              START CALCULATING
               START TORQUE Tk
                      │
                      │  ～S60
              RECEIVE AMBIENT
              TEMPERATURE Ta
                      │
                      │  ～S61
              RECEIVE COOLANT
               PRESSURE Pd
                      │
                      │  ～S62
        YES  ◇────────────────◇
    ┌────────   Ta<10℃?
    │             ◇────────────◇
```

LOW-AMBIENT-
TEMPERATURE START

```
    │                    │ NO
    │  ～S63              │            ～S66
 ◇──────────◇   YES      ◇─────────────────◇   INITIAL STROKE START
    P>P1?    ──────┐      CHECK CLUTCH   ──────────────────────┐
 ◇──────────◇      │      OFF TIME t0     t0≧6sec              │
    │ NO  ～S64     │ ～S65 ◇───────────◇                       │  ～S72
 ┌──────────┐  ┌──────────┐    │                    ┌──────────────────────────┐
 │ Tc=a2Pd  │  │ Tc=Tmin  │    │ t0<6sec            │ CALCULATE ADDITIONAL VALUE│
 └──────────┘  └──────────┘  TRANSITIONAL START     └──────────────────────────┘
                                │                                │  ～S73
                           ┌──────────┐  ～S67      ┌──────────────────────────┐
                           │ Tmax=f(Pd)│            │ Tc=Tmin+ADDITIONAL VALUE │
                           │ Tt=f(Pd,Ta)│           └──────────────────────────┘
                           │ Tmin=f(Pd)│
                           └──────────┘
                                │  ～S68
       Tt<Tmin    ◇─────────────────────◇  Tmax<Tt
    ┌─────────────                       ─────────────┐
    │  ～S69        ～S70 │Tmin<Tmid<Tmax              │ ～S71
┌──────────┐      ┌──────────┐              ┌──────────┐
│ Tc=Tmin  │      │  Tc=Tt   │              │ Tc=Tmax  │
└──────────┘      └──────────┘              └──────────┘
                       │
                    ◄──┤──►
                       │
                 ┌──────────┐
                 │   RET    │
                 └──────────┘
```

EP 1 867 875 A2

# FIG. 15

# FIG. 16

EP 1 867 875 A2

# FIG. 17

35

# FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005153188 A
- JP 5099156 A
- JP 2004 A
- JP 211663 A
- JP 2003278660 A
- EP 1437245 A2